(19) **Europäisches Patentamt European Patent Office Office européen des brevets**

(11) **EP 4 438 552 A1**

(12) **EUROPEAN PATENT APPLICATION**
published in accordance with Art. 153(4) EPC

(43) Date of publication:
**02.10.2024 Bulletin 2024/40**

(21) Application number: **22898672.5**

(22) Date of filing: **25.11.2022**

(51) International Patent Classification (IPC):
$C01B\ 17/20$ *(2006.01)*    $C01B\ 17/34$ *(2006.01)*
$H01B\ 1/06$ *(2006.01)*    $H01B\ 1/10$ *(2006.01)*
$H01M\ 10/0562$ *(2010.01)*

(52) Cooperative Patent Classification (CPC):
**C01B 17/20; C01B 17/34; H01B 1/06; H01B 1/10;**
**H01M 10/0562;** Y02E 60/10

(86) International application number:
**PCT/JP2022/043613**

(87) International publication number:
**WO 2023/095890 (01.06.2023 Gazette 2023/22)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **26.11.2021 JP 2021192580**

(71) Applicant: **University Public Corporation Osaka**
**Osaka-shi, Osaka 545-0051 (JP)**

(72) Inventors:
• **SAKUDA, Atsushi**
**Sakai-shi, Osaka 599-8531 (JP)**
• **NASU, Akira**
**Sakai-shi, Osaka 599-8531 (JP)**
• **TATSUMISAGO, Masahiro**
**Sakai-shi, Osaka 599-8531 (JP)**
• **HAYASHI, Akitoshi**
**Sakai-shi, Osaka 599-8531 (JP)**

(74) Representative: **Murgitroyd & Company**
**165-169 Scotland Street**
**Glasgow G5 8PL (GB)**

(54) **METHOD FOR PRODUCING METAL AND/OR METALLOID-CONTAINING SULFIDE, AND SODIUM-CONTAINING SULFIDE**

(57) The present addresses the problem of providing a new method for producing a metal and/or metalloid-containing sulfide. The problem is solved by a method for producing a metal and/or metalloid-containing sulfide characterized by using as a reaction medium and sulfur source a melt that can be obtained by heating a first sodium polysulfide represented by $Na_2S_x$ (in the formula, $1 < x \leq 5$) and synthesizing a sulfide containing a metal and/or metalloid (where the metal is neither an alkali metal nor an alkaline earth metal) under normal pressure.

[Figure 1]

**EP 4 438 552 A1**

**Description**

TECHNICAL FIELD

The present invention relates to a method for producing a metal and/or metalloid-containing sulfide. The present invention relates to a sodium-containing sulfide.

BACKGROUND ART

In recent years, there is an increasing demand for lithium ion batteries and sodium ion batteries for storing electric power in automobiles such as electric vehicles and hybrid vehicles, power-generating devices such as solar batteries and wind power generators, and the like.

In recent years, various researches on lithium ion batteries and sodium ion batteries have been conducted all over the world, and novel metal materials having superior properties have been developed, and research on a production method for mass production of novel metal materials has also been conducted.

The synthesis of an alkali metal-containing sulfide, for example, a lithium-containing sulfide can be performed, for example, by mixing lithium sulfide and a metal compound in an inert gas atmosphere, vacuum-sealing the mixture in a quartz ampule, and firing the mixture together with the quartz ampule (Patent Document 1).

Reated ART DOCUMENT

PATENT DOCUMENT

Patent Document 1: JP-A-2021-157884

SUMMARY OF THE INVENTION

PROBLEMS TO BE SOLVED BY THE INVENTION

The reason for sealing the mixture or the like in a quartz ampule in the production of an alkali metal-containing sulfide is that volatilization of sulfur in the mixture becomes a problem when the mixture is subjected to a firing treatment in an inert atmosphere at normal pressure. However, such a sealing treatment takes time and effort, and is not suitable for mass production. Therefore, a new production method has been required.

SOLUTIONS TO THE PROBLEMS

The present inventors have extensively conducted studies on the production of an alkali metal-containing sulfide, and have found that by using sodium polysulfide as a reaction medium and a sulfur source, an alkali metal-containing sulfide can be produced without performing a vacuum-sealing treatment, leading to the present invention.

Thus, in accordance with the present invention, there is provided a method for producing a metal and/or metalloid-containing sulfide, wherein the metal and/or metalloid-containing sulfide, provided that the metal is neither an alkali metal nor an alkaline earth metal, is synthesized under normal pressure using a melt obtainable by heating a first sodium polysulfide represented by $Na_2S_x$ ($1 < x \le 5$) as a reaction medium and a sulfur source.

Further, in accordance with the present invention, there is provided a sodium-containing sulfide represented by the following formula (I):

$$Na_{3-\delta}\alpha_{1-\delta}\beta_\delta S_4 \qquad (I)$$

wherein $\delta$ is $0 < \delta < 1$, $\alpha$ is one or more elements selected from among Sb, P, As, and Bi, and $\beta$ is one or more elements selected from among W, Mo, and Cr.

EFFECTS OF THE INVENTION

In accordance with the present invention, a method for producing a novel metal and/or metalloid-containing sulfide can be provided.

BRIEF DESCRIPTION OF THE DRAWINGS

Fig. 1 is a graph showing the results of X-ray diffraction measurement performed on the sodium-containing sulfides of Examples 1 to 3 and Comparative Example 1.

Fig. 2Ais a graph showing the results of X-ray diffraction measurement performed on the sodium-containing sulfides of Examples 4 to 6.

Fig. 2B is a graph showing the results of X-ray diffraction measurement performed on the sodium-containing sulfides of Examples 7 to 9.

Fig. 2C is a graph showing the results of X-ray diffraction measurement performed on the sodium-containing sulfides of Examples 6 to 10.

Fig. 3 is a graph showing Arrhenius plots of the sodium-containing sulfides of Examples 2, 4, and 6.

Fig. 4 is a graph showing the results of X-ray diffraction measurement performed on the sodium-containing sulfides of Examples 11 to 13.

Fig. 5 is a graph showing the results of X-ray diffraction measurement performed on the sodium-containing sulfides of Examples 14 to 16.

Fig. 6 is a graph showing the results of X-ray diffraction measurement performed on the sodium-containing sulfides of Examples 17, 18, and 22.

Fig. 7 is a graph showing the results of X-ray diffraction measurement performed on the sodium-containing sulfides of Examples 17 and 19 to 21.

Fig. 8 is a graph showing Arrhenius plots of the sodium-containing sulfides of Examples 17 to 20.

Fig. 9 is a graph showing the results of X-ray diffraction measurement performed on the sodium-containing sulfides of Examples 17, 23, and 24.

Fig. 10 is a graph showing the results of X-ray diffraction measurement performed on the sodium-containing sulfides of Examples 25 and 26.

Fig. 11A is a graph showing the result of TG-DTA measurement performed on a mixture of $Na_2S$ and S.

Fig. 11B is a graph showing the result of TG-DTA measurement performed on a mixture of $Na_2S$ and S.

Fig. 12A is a graph showing the result of TG-DTA measurement performed on a mixture of $Li_2S$ and S.

Fig. 12B is a graph showing the result of TG-DTA measurement performed on a mixture of $Li_2S$ and S.

Fig. 13 is a graph showing the result of TG-DTA measurement performed on a mixture of $Na_2S$, B and S.

DETAILED DESCRIPTION

In the present description, "a to b" (a and b are specific values) means "a or more and b or less" unless otherwise specified.

(Method for producing metal and/or metalloid-containing sulfide)

The present invention provides a method for producing a metal and/or metalloid-containing sulfide, wherein the metal and/or metalloid-containing sulfide, provided that the metal is neither an alkali metal nor an alkaline earth metal, is synthesized under normal pressure using a melt obtainable by heating a first sodium polysulfide represented by $Na_2S_x$ (1 < x ≤ 5) as a reaction medium and a sulfur source (hereinafter, this method is also simply called the present production method).

In one specific embodiment, the present invention provides a method for producing an Na-M-containing sulfide, wherein a complex sulfide containing Na and M, wherein M is one or more metals and/or metalloids which are neither an alkali metal nor an alkaline earth metal, is synthesized under normal pressure using a melt obtainable by heating a first sodium polysulfide represented by $Na_2S_x$ (1 < x ≤ 5) as a reaction medium and a sulfur source.

In the present invention, sodium polysulfide can be used as a flux. Therefore, crystals can be obtained by a flux method involving using sodium polysulfide as a flux. The flux method is a type of method of growing crystals from a solution, and is a method involving dissolving a solute in a flux (solvent) melted at a high temperature and then forming and growing crystals. The synthesis of the Na-M-containing sulfide is preferably in a self-flux method in which the composition ratio of starting materials such as a sodium polysulfide, a simple substance or compound of a metal and/or a metalloid is combined with the composition of the target substance.

When a crystal is formed and grown, a crystal prepared in advance may be added as a seed crystal. By adding the seed crystal, the growth of the crystals can be promoted.

The form of the precipitated crystal is not particularly limited, and may be, for example, a needle form, a dendritic form, or a plate form. The size of the crystal is also not particularly limited.

The first sodium polysulfide represented by $Na_2S_x$ ($1 < x \leq 5$) is not particularly limited, and examples thereof include $Na_2S_2$, $Na_2S_3$, $Na_2S_4$, and $Na_2S_5$. The first sodium polysulfide may include either one type or two or more types thereof. The first sodium polysulfide is preferably a first sodium polysulfide having an average composition represented by $Na_2S_x$ ($1 < x \leq 5$), preferably a first sodium polysulfide represented by $Na_2S_x$ ($1 < x \leq 4$), more preferably a first sodium polysulfide represented by $Na_2S_x$ ($1 < x \leq 3$), and more preferably a first sodium polysulfide represented by $Na_2S_x$ ($1.5 \leq x \leq 2.5$).

As a starting material, it is preferable to use a first sodium polysulfide represented by $Na_2S_x$ ($1 < x \leq 5$) and one or more simple substances of a metal and/or a metalloid or one or more compounds containing a metal and/or a metalloid, and it is more preferable to use a first sodium polysulfide and a simple substance of a metal and/or a metalloid or a compound containing a metal and/or a metalloid in a stoichiometric ratio of the metal and/or metalloid-containing sulfide to be synthesized.

The simple substance S is not particularly limited in form, and may be cyclic sulfur such as Ss, chain S, rubber-like S, or insoluble S.

The metal or metalloid (M) is not particularly limited, and examples thereof include metals or metalloids of Group 3 to Group 16 of Period 2 to Period 6, and the metal or metalloid is preferably a metal or metalloid of Groups 5 to 16 of Period 2 to 6. These may be used singly, or two or more of them may be used in combination.

Examples of the metals or metalloids of Group 3 to Group 16 of Period 2 to Period 6 specifically include B, Al, Si, P, Ti, V, Cr, Mn, Fe, Co, Ni, Cu, Zn, Ga, Ge, As, Se, Y, Zr, Nb, Mo, Ru, Rh, Pd, Ag, Cd, In, Sn, Sb, Te, La, Ta, W, Re, Ir, Tl, Pb, and Bi, and more specifically include B, Al, Si, P, Zn, Ga, Ge, As, Se, Cd, In, Sn, Sb, Te, Tl, Pb, Bi, V, Cr, Mn, Nb, Mo, Tc, Ta, W, and Re. Among them, the metal or metalloid is preferably selected from among B, Al, Si, Ga, Ge, Sn, Sb, O, As, Bi, W, Mo, and Cr, and more preferably selected from among B, Al, Si, Ga, Ge, Sn, Sb, P, W, and Mo.

Examples of the simple substance of metal or metalloid include the above-described metals or metalloids. Metal or metalloid simple substances may be used singly, or two or more thereof may be used. As the combination of two or more metals, any combination of the above-described metals or metalloids are conceivable, but it is preferable to select at least one or more from among Sb, P, As, Bi, W, Mo, Cr, Si, B, and Al; at least one or more are more preferably selected from among Sb, P, As, Bi, W, Mo, and Cr, more preferably selected from among Sb, P, As, Bi, W, Mo, Cr, Si, B, and Al, more preferably selected from among Sb, P, As, Bi, W, Mo, and Cr; it is more preferable that at least one or more are selected from among Sb, P, As, and Bi and at least one or more are selected from among W, Mo, among Cr; a combination of one selected from among Sb, P, As, and Bi and one selected from among W, Mo, and Cr; and a combination of Sb and W, a combination of Sb and Mo, and a combination of P and W are more preferable.

The compound containing a metal or a metalloid is not particularly limited, and examples thereof include of oxides, nitrides, sulfides, selenides, and halides of a metal or a metalloid. Specifically, it is an oxide, a nitride, a sulfide, a selenide, or a halide of a metal or a metalloid of Group 3 to Group 16 of Period 2 to Period 6, more specifically, an oxide, a nitride, a sulfide, a selenide, or a halide of a metal or a metalloid of Group 5 to Group 16 of Period 2 to Period 6, and preferably an oxide or a nitride of a metal or a metalloid of Group 5 to Group 16 of Period 2 to Period 6.

Examples of the oxide of a metal or a metalloid include BOz ($0 < z \leq 2$) [specifically, $B_2O_3$], AlOz ($0 < z \leq 2$) [specifically, $Al_2O_3$], SiOz ($0 < z \leq 2$) [specifically, $SiO_2$], POz ($0 < z \leq 4$) [specifically, $PO_2$, $P_2O_3$, and $P_2O_5$], TiOz ($0 < z \leq 3$) [specifically, TiO, $Ti_2O_3$, $TiO_2$, and $TiO_3$], VOz ($0 < z \leq 3$) [specifically, VO, $VO_3$, $V_2O_3$, $V_2O_4$, $V_2O_5$, and $V_6O_{13}$], CrOz ($0 < z \leq 3$) [specifically, CrO, $Cr_2O_3$, $CrO_2$, and CrOs], MnOz ($0 < z \leq 3$) [specifically, MnO, $Mn_3O_4$, $MnO_2$, $MnO_3$, and $Mn_2O_3$], FeOz ($0 < z \leq 3$) [specifically, FeO, $Fe_3O_4$, $FeO_2$, $Fe_2O_3$, and $FeO_3$], CoOz ($0 < z \leq 3$) [specifically, CoO, $Co_3O_4$, $CoO_2$, and $CoO_3$], NiOz ($0 < z \leq 3$) [specifically, NiO, $NiO_2$, $NiO_3$, and $Ni_2O_3$], CuOz ($0 < z \leq 3$) [specifically, $Cu_2O$, CuO, $Cu_2O_3$, $CuO_2$, and $CuO_3$], ZnOz ($0 < z \leq 3$) [specifically, ZnO, $ZnO_2$, and $ZnO_3$], GaOz ($0 < z \leq 2$) [specifically, $Ga_2O_3$], GeOz ($0 < z \leq 3$) [specifically $GeO_2$], AsOz ($0 < z \leq 3$) [specifically $As_2O_3$], SeOz ($0 < z \leq 3$) [specifically, SeO, $SeO_2$, and $SeO_3$], YOz ($0 < z \leq 3$) [specifically $Y_2O_3$], ZrOz ($0 < z \leq 2$) [specifically $ZrO_2$], NbOz ($0 < z \leq 3$) [specifically, NbO, $NbO_2$, $Nb_2O_5$, and $NbO_3$], MoOz ($0 < z \leq 6$) [specifically, MoO, $MoO_2$, $MoO_3$, $Mo_2O_7$, $MoO_4$, and MoOe], RuOz ($0 < z \leq 4$) [specifically, $RuO_2$ and $RuO_4$], RhOz ($0 < z \leq 3$) [specifically $RhO_2$], AgOz ($0 < z \leq 2$) [specifically $Ag_2O$], CdOz ($0 < z \leq 3$) [specifically CdO], SnOz ($0 < z \leq 3$) [specifically, SnO, $SnO_2$, and $SnO_3$], PbOz ($0 < z \leq 2$) [specifically PdO], BiOz ($0 < z \leq 3$) [specifically $Bi_2O_3$], InOz ($0 < z \leq 3$) [specifically $In_2O_3$], SbOz ($0 < z \leq 3$) [specifically, $SbO_2$, $Sb_2O_3$, and $Sb_2O_5$], TeOz ($0 < z \leq 3$) [specifically $TeO_2$ and $TeO_3$], LaOz ($0 < z \leq 3$) [specifically $La_2O_3$], TaOz ($0 < z \leq 3$) [specifically, TaO, $TaO_2$, $TaO_3$, and $Ta_2O_5$], WOz ($0 < z \leq 3$) [specifically, WO, $W_2O_3$, $WO_2$, $W_2O_5$, and $WO_3$], ReOz ($0 < z \leq 4$) [specifically, $ReO_3$ and $Re_2O_7$], IrOz ($0 < z \leq 3$) [specifically $IrO_2$], TlOz ($0 < z \leq 3$) [specifically, $Tl_2O$ and $Tl_2O_3$], and PbOz ($0 < z \leq 3$) [specifically, PbO, $Pb_3O_4$, and $PbO_2$].

The sulfide of a metal or a metalloid may be $M^1Sz$ ($M^1$ is selected from among B, Al, Si, Ti, V, Cr, Mn, Fe, Co, Ni, Cu, Zn, Ga, Ge, As, Se, Y, Zr, Nb, Mo, Ru, Rh, Pd, Ag, Cd, In, Sn, Sb, Te, La, Ta, W, Re, Ir, Tl, Pb, and Bi, $0 < z \leq 6$;), $P_AS_B$ (A and B are arbitrary positive integers), or the like.

Examples thereof specifically include $B_2S_3$, $Al_2S_3$, SiS, $SiS_2$, $P_4S_3$, $P_2S_5$, $P_4S_7$, $P_4S_5$, $TiS_2$, VS, $V_3S_4$, $VS_2$, $V_2S_5$, CrS, $Cr_2S_3$, $CrS_2$, $CrS_3$, MnS, $MnS_2$, $MnS_3$, FeS, $Fe_3S_4$, $FeS_2$, $FeS_3$, CoS, $CoS_2$, $Ni_3S_2$, NiS, $Ni_3S_4$, $NiS_2$, $Cu_2S$, CuS, $CuS_2$, $CuS_3$, $Zn_2S$, ZnS, $ZnS_2$, $ZnS_3$, $Ga_2S_3$, $GeS_2$, GeS, $As_2S_3$, $As_4S_4$, $As_2S_5$, $SeS_2$, $SeS_6$, $Y_2S_3$, $ZrS_2$, NbS,

$NbS_2$, $MoS$, $MoS_2$, $RuS_2$, $Rh_2S_3$, $PdS$, $Ag_2S$, $CdS$, $InS$, $SnS$, $SnS_2$, $Sb_2S_3$, $TeS_2$, $La_2S_3$, $TaS$, $TaS_2$, $TaS_3$, $WS$, $WS_2$, $WS_3$, $ReS_2$, $IrS_2$, $Tl_2S$, $PbS$, $PbS_2$, $BiS$, and $Bi_2S_3$.

The selenide of a metal or a metalloid include $M^2Sz$ ($M^2$ is selected from among B, Al, Si, P, Ti, V, Cr, Mn, Fe, Co, Ni, Cu, Zn, Ga, Ge, As, Se, Y, Zr, Nb, Mo, Ru, Rh, Pd, Ag, Cd, In, Sn, Sb, Te, La, Ta, W, Re, Ir, Tl, Pb, and Bi, and $0 < z \leq 6$).

Examples thereof specifically include $BSe$, $Al_2Se_3$, $PSe$, $TiSe$, $TiSe_2$, $TiSe_3$, $VSe$, $VSe_2$, $VSe_3$, $CrSe$, $Cr_2Se_3$, $CrSe_2$, $CrSe_3$, $MnSe$, $MnSe_2$, $MnSe_3$, $FeSe$, $Fe_2Se_3$, $FeSe_2$, $FeSe_3$, $CoSe$, $CoSe_2$, $CoSe_3$, $Co_2Se_3$, $Co_3Se_4$, $NiSe$, $NiSe_2$, $NiSe_3$, $Cu_2Se$, $CuSe$, $CuSe_2$, $CuSe_3$, $ZnSe$, $ZnSe_2$, $ZnSe_3$, $GaSe$, $Ga_2Se_3$, $GeSe$, $GeSe_2$, $Y_2Se_3$, $ZrSe_2$, $NbSe$, $NbSe_2$, $NbSe_3$, $PbSe$, $PbSe_2$, $CdSe$, $InSe$, $In_2Se$, $In_2Se_3$, $SnSe$, $SnSe_2$, $Sb_2Se_3$, $TaSe_2$, $La_2Se_3$, $TaSe$, $TaSe_2$, $TaSe_3$, $WSe$, $WSe_2$, $WSe_3$, $ReSe_2$, $IrSe$, $Tl_2Se$, $ZnSe$, $PbSe$, and $Bi_2Se_3$.

Examples of the nitride of a metal or a metalloid include $BN$, $AlN$, $Si_3N_4$, $P_3N_5$, $PN$, $P_2N_3$, $TiN$, $VN$, $CrN$, $Cr_2N$, $MnN$, $MnN_2$, $Mn_4N$, $FeN$, $Fe_2N$, $Fe_4N$, $Fe_7N_3$, $Fe_{16}N_2$, $CoN$, $NiN$, $CuN$, $Cu_3N$, $Zn_3N_2$, $GaN$, $Ge_3N_4$, $AsN$, $Se_4N_4$, $YN$, $ZrN$, $NbN$, $Mo_2N$, $RuN_2$, $RuN$, $PbN_2$, $Ag_3N$, $CdN$, $InN$, $SnN$, $SbN$, $TeN$, $TaN$, $WN$, $ReN_2$, $IrN$, $TlN$, and $BiN$.

The halide of a metal or a metalloid may be $M^3\gamma z$ ($M^3$ is selected from among B, Al, Si, P, Ti, V, Cr, Mn, Fe, Co, Ni, Cu, Zn, Ga, Ge, As, Se, Y, Zr, Nb, Mo, Ru, Rh, Pd, Ag, Cd, In, Sn, Sb, Te, La, Ta, W, Re, Ir, Tl, Pb, and Bi, $\gamma$ is selected from among F, Cl, Br, and I, and $0 < z \leq 6$).

Examples thereof specifically include $BF_3$, $BCl_3$, $B_4Cl_4$, $B_2Cl_4$, $BBr_3$, $BI_3$, $AlF_3$, $AlCl_3$, $AlBr_3$, $AlI_3$, $SiF_4$, $SiCl_3$, $SiCl_4$, $Si_4Cl_{10}$, $Si_5Cl_{12}$, $Si_6Cl_{12}$, $SiBr_4$, $Si_2Br_6$, $SiI_4$, $PCl_3$, $PCl_5$, $PBr_3$, $PBr_5$, $PI_3$, $PI_5$, $TiF_4$, $TiCl_3$, $TiCl_4$, $TiBr_4$, $TiI_4$, $VF_5$, $VCl_2$, $VCl_4$, $VCl_5$, $VBr_3$, $VI_3$, $CrCl_2$, $CrCl_3$, $CrCl_4$, $CrBr_3$, $CrI_3$, $MnF_2$, $MnCl_2$, $MnBr_2$, $MnI_2$, $FeF_3$, $FeCl_2$, $FeCl_3$, $FeBr_2$, $FeBr_3$, $FeI_2$, $CoF_2$, $CoF_3$, $CoCl_2$, $CoCl_3$, $CoBr_2$, $CoBr_3$, $CoI_2$, $CoI_3$, $NiF_2$, $NiCl_2$, $NiCl_4$, $NiBr_2$, $NiI_2$, $CuF$, $CuF_2$, $CuCl$, $CuCl_2$, $CuBr$, $CuBr_2$, $CuI$, $CuI_2$, $ZnF_2$, $ZnCl_2$, $ZnBr_2$, $ZnI_2$, $GaF_3$, $GaCl_3$, $GaBr_3$, $GaI_3$, $GeCl_2$, $GeCl_4$, $GeBr_2$, $GeBr_4$, $GeI_2$, $GeI_4$, $AsF_3$, $AsCl_3$, $AsCl_5$, $AsBr_3$, $AsI_3$, $SeCl_4$, $SeBr_4$, $SeI_4$, $YF_3$, $YCl_3$, $YBr_3$, $YI_3$, $ZrF_4$, $ZrCl_4$, $ZrBr_4$, $ZrI_4$, $NbF_5$, $NbCl_5$, $NbBr_5$, $NbI_5$, $MoF_6$, $MoCl_3$, $MoCl_5$, $MoBr_2$, $MoBr_3$, $MoI_3$, $RuF_5$, $RuF_6$, $RuCl_3$, $RuBr_3$, $RuI_3$, $RhCl_3$, $RhBr_3$, $RhI_3$, $PdF_2$, $PdF_4$, $PdCl_2$, $PdBr_2$, $PdI_2$, $Ag_2F$, $AgF$, $AgF_2$, $AgF_3$, $AgCl$, $AgBr$, $AgI$, $CdF_2$, $CdCl_2$, $CdBr_2$, $CdI_2$, $InF_3$, $InCl$, $InCl_3$, $In_5Cl_9$, $In_2Cl_3$, $InBr_3$, $InI_3$, $SnF_4$, $SnCl_2$, $SnCl_4$, $SnBr_2$, $SnBr_4$, $SnI_2$, $SnI_4$, $SbF_3$, $SbF_5$, $SbCl_3$, $SbCl_5$, $SbBr_3$, $SbBr_5$, $SbI_3$, $TeCl_4$, $TeBr_2$, $TeBr_4$, $TeI_4$, $LaF_3$, $LaCl_3$, $LaBr_3$, $LaI_3$, $TaF_5$, $TaCl_5$, $TaBr_5$, $TaI_5$, $WF_6$, $WCl_6$, $WBr_5$, $WBr_6$, $WI_3$, $ReF_6$, $Re_2Cl_{10}$, $ReBr_3$, $ReBr_5$, $IrF_6$, $IrCl_3$, $IrBr_3$, $IrI_4$, $TlF$, $TlCl$, $TlBr$, $TlI$, $PbF_2$, $PbF_4$, $PbCl_2$, $PbCl_4$, $PbBr_2$, $PbI_2$, $BiF_3$, $BiCl_3$, $BiBr_3$, and $BiI_3$.

These compounds containing a metal or a metalloid are preferably used at a stoichiometric ratio of the metal and/or metalloid-containing sulfide described later.

The present production method may be carried out either at a pressure lower than normal pressure or at a pressure higher than normal pressure, but is preferably carried out at normal pressure. The normal pressure refers to, for example, a range of 1013 hPa $\pm$ 200 hPa. In addition, the pressure conditions may be varied; for example, the pressure is gradually increased, or the pressure is gradually reduced, or the pressure is kept at normal pressure during heating and is increased during cooling. Hear, the normal pressure refers to a normal pressure at the time of synthesis of a sulfide containing at least a metal and/or a metalloid described later.

The present production method is preferably performed in an inert atmosphere (for example, in a nitrogen atmosphere, in an argon atmosphere, in a helium atmosphere, etc.). In addition, the treatment is preferably performed under an environment in which the moisture concentration is 10,000 ppm or less and the oxygen concentration is 10,000 ppm or less.

The sulfide containing a metal and/or a metalloid (hereinafter, also simply referred to as metal and/or metalloid-containing sulfide) material to be used in the present production method may be subjected to a mixing step before being subjected to production. The mixing method is not particularly limited as long as it can be used in the art, and examples thereof include a method using a mortar, a V-type mixer, a mechanochemical treatment, use of a sand mill, use of a mixer (a homomixer, a planetary mixer, etc.), and the like.

The treatment device for mechanochemical treatment is not particularly limited as long as it can mix while applying mechanical energy, and for example, a ball mill, a bead mill, a jet mill, a vibration mill, a disk mill, a turbo mill, mechanofusion, or the like can be used.

The present production method includes a step of heating a first sodium polysulfide represented by $Na_2S_x$ ($1 < x \leq 5$). The heating step can be performed, for example, by adding materials to be used for producing the metal and/or metalloid-containing sulfide (specifically, a first sodium polysulfide, and one or more simple substances of a metal and/or a metalloid or one or more compounds containing a metal and/or a metalloid) [and, as necessary, simple substance S] to a reaction vessel and heating the reaction vessel.

The heating temperature is not particularly limited, but is preferably equal to or higher than the melting point of the sodium polysulfide and equal to or lower than the boiling point of the sodium polysulfide. The heating temperature may be appropriately set according to the sodium polysulfide to be used, the target substance, and the heat resistance and the like of the reaction vessel, and may be in a range represented by a combination of any upper limit value and lower limit value selected from among 50°C, 60°C, 70°C, 80°C, 90°C, 100°C, 110°C, 120°C, 140°C, 150°C, 160°C, 180°C, 200°C, 220°C, 240°C, 250°C, 260°C, 280°C, 300°C, 320°C, 340°C, 350°C, 360°C, 380°C, 400°C, 420°C, 440°C, 450°C, 480°C, 500°C, 550°C, 600°C, 650°C, 700°C, 750°C, 800°C, 850°C, 900°C, 950°C, 999°C, 1000°C, 1100°C, 1200°C, and 1300°C. Among these, the heating temperature is preferably in the range of 150°C to 1200°C, more preferably in the range of 200°C to 1000°C, more preferably in the range of 300°C to 800°C, and more preferably in the range of 350°C to 700°C.

The heating may be performed only once or a plurality of times. When the heating is performed a plurality of times, each heating temperature is preferably in the range of 150°C to 1200°C, more preferably in the range of 200°C to 1000°C, more preferably in the range of 300°C to 800°C, and more preferably in the range of 350°C to 700°C.

For example, when heating is performed twice, there may or may not be a cooling step between the first heating and the second heating. The second heating may be performed at a higher temperature or a lower temperature than the first heating.

The heating time is not particularly limited as long as the material containing the sodium polysulfide can be melted, and may be appropriately set. The heating time may be in a range represented by a combination of any upper limit value and lower limit value selected from among, for example, 1 minute, 2 minutes, 5 minutes, 10 minutes, 20 minutes, 30 minutes, 40 minutes, 50 minutes, 1.0 hours, 1.5 hours, 2.0 hours, 2.5 hours, 3.0 hours, 3.5 hours, 4.0 hours, 4.5 hours, 5.0 hours, 5.5 hours, 6.0 hours, 6.5 hours, 7.0 hours, 7.5 hours, 8.0 hours, 8.5 hours, 9.0 hours, 9.5 hours, 10.0 hours, 10.5 hours, 11.0 hours, 11.5 hours, 12.0 hours, 12.5 hours, 13.0 hours, 13.5 hours, 14.0 hours, 14.5 hours, 15.0 hours, 15.5 hours, 16.0 hours, 17.0 hours, 17.5 hours, 18.0 hours, 18.5 hours, 19.0 hours, 19.5 hours, 20.0 hours, 20.5 hours, 21.0 hours, 21.5 hours, 22.0 hours, 22.5 hours, 23.0 hours, 23.5 hours, 24.0 hours, 25.0 hours, 30.0 hours, 36.0 hours, 42.0 hours, 48.0 hours, and 50.0 hours. Among these, the heating time is preferably in the range of 1 minute to 24 hours, and more preferably in the range of 30 minutes to 20 hours. When the heating step is performed a plurality of times, the heating time may be appropriately set for each heating step.

In the present production method, it is not necessary to perform the heating step under sealing. That is, it is possible to produce a metal and/or metalloid-containing sulfide in an open system. In the conventional method, in order to avoid volatilization of sulfur, the synthesis is performed by vacuum-sealing a sample for heat treatment in a quartz ampule or the like to form a sealed system and conducting heating treatment, or by conducting heat treatment under a gas flow using lithium sulfide or sodium sulfide. The present invention is a method for producing a metal and/or metalloid-containing sulfide different from the conventional method in that it is not necessary to seal a container at the time of heating. In the present production method, the sulfur source is in a state of melt. Therefore, the production time can be shortened as compared with the reaction between solids, and a sulfide with high uniformity is afforded.

The temperature raising rate during heating is not particularly limited, and may be appropriately set. The temperature raising rate may be in a range represented by a combination of any upper limit value and lower limit value selected from among, for example, 10°C/hour, 60°C/hour, 120°C/hour, 180°C/hour, 240°C/hour, 300°C/hour, 450°C/hour, 600°C/hour, 1200°C/hour, 1800°C/hour, 2400°C/hour, 3000°C/hour, and 6000°C/hour. Among these, the temperature raising rate is preferably in the range of 60°C/hour to 3000°C/hour, and more preferably 300°C/hour to 1200°C/hour. However, when the starting materials contain simple substance S, volatilization of S occurs before a low-volatile sodium polysulfide is formed if the temperature raising rate is high, and therefore, it is necessary to use a temperature raising rate and a temperature raising program with which sodium polysulfide is sufficiently formed. The temperature raising rate at which sodium polysulfide is sufficiently formed is, for example, preferably 1200°C/hour or less, and more preferably 600°C/hour or less. Furthermore, as a temperature raising program with which sodium polysulfide is sufficiently formed, it is more preferable that there is a time of 10 minutes of more for reacting sodium polysulfide with simple substance S at a temperature of 100°C or more and 200°C or less.

The heating method is not particularly limited as long as the above-described temperature raising rate can be achieved. For the heating, for example, an electric furnace, a hot plate, a muffle furnace, a high-frequency induction heating device, a rotary kiln, a sand bath, a salt bath, or the like may be used. The heating device preferably has a function of adjusting temperature and time.

The melt that can be obtained by heating a first sodium polysulfide represented by $Na_2S_x$ ($1 < x \leq 5$) can be obtained by heating and reacting a mixture containing a second sodium (poly)sulfide represented by $Na_2S_y$ ($0 < y < 5$) and simple substance S. Here, the second sodium polysulfide is preferably a second sodium polysulfide having an average composition represented by $Na_2S_y$ ($0 < y < 5$), preferably a second sodium polysulfide represented by $Na_2S_y$ ($0 < y < 4$), more preferably a second sodium polysulfide represented by $Na_2S_y$ ($0 < y < 3$), and more preferably a second sodium polysulfide represented by $Na_2S_y$ ($0 < y < 2.5$).

This heating step may be either the same as or different from the heating step for melting the first sodium polysulfide represented by $Na_2S_x$ ($1 < x \leq 5$). That is, if the step of heating for obtaining a melt of a first sodium polysulfide represented by $Na_2S_x$ ($1 < x \leq 5$) from a mixture containing a second sodium (poly)sulfide represented by $Na_2S_y$ ($0 < y < 5$) and simple substance S is the same as the heating step for melting a first sodium polysulfide represented by $Na_2S_x$ ($1 < x \leq 5$), the melt of the first sodium polysulfide represented by $Na_2S_x$ ($1 < x \leq 5$) obtained by reacting the second sodium (poly)sulfide represented by $Na_2S_y$ ($0 < y < 5$) with the simple substance S by heating may be used as a reaction medium and a sulfur source. The heating condition for reacting the mixture containing the second sodium (poly)sulfide

represented by $Na_2S_y$ (0 < y < 5) and the simple substance S by heating can be set in the same manner as the heating step for melting the first sodium polysulfide represented by $Na_2S_x$ (1 < x ≤ 5) (in particular, the condition including the simple substance S). The mixture containing the second sodium (poly)sulfide represented by $Na_2S_y$ (0 < y < 5) and the simple substance S may contain a simple substance of Na.

The second sodium polysulfide represented by $Na_2S_y$ (0 < y < 5) is not particularly limited, and examples thereof include $Na_2S$, $Na_2S_2$, $Na_2S_3$, and $Na_2S_4$.

The present production method may include a step of cooling the heated material. The cooling method is not particularly limited, and cooling may be performed by natural cooling, or slow cooling or rapid cooling may be performed using an arbitrary cooling device. As the cooling device, for example, a liquid rapid solidification device, a quenched flake production device, an in-liquid spinning device, a gas atomizing device, a water atomizing device, a rotary disk device, or the like can be used.

The temperature lowering rate at the time of cooling is not particularly limited, and may be appropriately set. The cooling rate may be in a range represented by a combination of any upper limit value and lower limit value selected from among, for example, 3,600,000°C/hour, 1,800,000°C/hour, 600,000°C/hour, 300,000°C/hour, 200,000°C/hour, 100,000°C/hour, 60,000°C/hour, 54,000°C/hour, 48,000°C/hour, 42,000°C/hour, 36,000°C/hour, 30,000°C/hour, 24,000°C/hour, 20,000°C/hour, 18000°C/hour, 15,000°C/hour, 12,000°C/hour, 6,000°C/hour, 3,000°C/hour, 2,400°C/hour, 1,800°C/hour, 1,200°C/hour, 900°C/hour, 600°C/hour, 300°C/hour, 240°C/hour, 180°C/hour, 120°C/hour, 60°C/hour, and 10°C/hour.

The metal and/or metalloid-containing sulfide produced by the present production method may or may not contain sodium. That is, the composition is represented by M-S or Na-M-S (M is a metal or a metalloid of Group 3 to Group 16 of Period 2 to Period 6). Examples of the metal and/or metalloid-containing sulfide also include an oxysulfide.

Examples of the metal and/or metalloid-containing sulfide containing sodium (not being an oxysulfide) include $Na_3BS_3$, $Na_4SiS_4$, $Na_3PS_4$, $75Na_4SiS_4·25Na_5AlS_4$, $Na_9SiAlS_8$, $Na_5AlS_4$, $Na_5GaS_4$, $Na_4GeS_4$, $Na_4SnS_4$, $75Na_3BS_3·25Na_4SiS_4$, $Na_{2.88}Sb_{0.88}W_{0.12}S_4$, $Na_{2.85}Sb_{0.85}W_{0.15}S_4$, $Na_{2.82}Sb_{0.82}W_{0.18}S_4$, $Na_{2.80}Sb_{0.80}W_{0.20}S_4$, $Na_{2.88}Sb_{0.88}Mo_{0.12}S_4$, $Na_{2.9375}P_{0.9375}W_{0.0675}S_4$, $Na_2FeS_2$, $Na_5FeS_4$, $Na_3NbS_4$, $Na_3TaS_4$, $Na_6MnS_4$, and $Na_3Cu_4S_4$.

Examples of the metal and/or metalloid-containing oxysulfide containing sodium (sodium-containing sulfide) include $Na_3BS_3$-$SiO_2$, $Na_3BS_3$-$Al_2O_3$, and $3Na_4SiS_4·Na_4SiO_4$.

The metal and/or metalloid-containing sulfide may be a sodium-containing sulfide represented by the following formula (I):

$$Na_{3-\delta}\alpha_{1-\delta}\beta_\delta S_4 \qquad (I)$$

wherein δ is 0 < δ < 1, α is one or more elements selected from among Sb, P, As, and Bi, and β is one or more elements selected from among W, Mo, and Cr.

The metal and/or metalloid-containing sulfide may be a sodium-containing sulfide represented by the following formula (II):

$$Na_{3-\delta}\alpha_{1-\delta}\beta_\delta S_4 \qquad (II)$$

wherein δ is 0 < δ < 1, α is one or more elements selected from among Sb, As, and Bi, and β is one or more elements selected from among W, Mo, and Cr.

Further, the metal and/or metalloid-containing sulfide may be a sodium-containing sulfide represented by the following formula (III):

$$Na_{3-\delta}Sb_{1-\delta}W_\delta S_4 \qquad (III)$$

wherein δ is 0 < δ < 1.

The sodium-containing sulfides represented by the above formulas (I) to (III) have superior ion conductivity as compared with conventional sodium-containing sulfides.

δ in the above formulas (I) to (III) preferably satisfies 0 < δ ≤ 0.2. Examples of the sodium-containing sulfides represented by the formulas (I) to (III) include $Na_{2.88}Sb_{0.88}W_{0.12}S_4$, $Na_{2.85}Sb_{0.85}W_{0.15}S_4$, $Na_{2.82}Sb_{0.82}W_{0.18}S_4$, $Na_{2.80}Sb_{0.80}W_{0.20}S_4$, $Na_{2.88}Sb_{0.88}Mo_{0.12}S_4$, and $Na_{2.9375}P_{0.9375}W_{0.0675}S_4$.

The metal and/or metalloid-containing sulfide obtained by the present production method may be either a crystalline substance or amorphous (glass). The fact that a metal and/or metalloid-containing sulfide is amorphous may refer to a state in which no peak is confirmed in X-ray diffraction (XRD) using a CuKα ray for the metal and/or metalloid-containing sulfide, or all peaks of 2θ in XRD have a half value width (full width at half maximum; in degree) of 0.5 or more, or may refer to a state in which all the peaks have a half value width (full width at half maximum) of 1.0 or more, or may refer to a state in which all the peaks have a half value width (full width at half maximum) of 2.0 or more. That fact may also refer to a state in which clear crystallites are not confirmed using a transmission electron microscope.

The present production method may include a step of further heating the metal and/or metalloid-containing sulfide of glass obtained by the above production method. The heating temperature and the heating time are as described above. By further heating the metal and/or metalloid-containing sulfide of glass, crystallized glass (glass-ceramics) can be obtained.

The glass-ceramic refers to a material having a glass phase and a (precipitated) crystal phase dispersed in the glass phase. The glass-ceramic can be formed, for example, by heating glass at a temperature equal to or higher than its glass transition point to crystallize (at least a part of) the material. The glass transition point can be measured by, for example, differential thermal analysis (DTA).

The fact that a metal and/or metalloid-containing sulfide is a glass-ceramic can be confirmed, for example, by observing that a plurality of crystal phases are contained in a glass phase using a transmission electron microscope (TEM).

The crystalline metal and/or metalloid-containing sulfide can be obtained, for example, by cooling the heated material at a temperature lowering rate of 1000°C/hour or less. The temperature lowering rate may be appropriately set according to the composition of the heated material. This does not indicate that cooling at a temperature lowering rate of 1000°C/hour or less is essential to obtain a crystalline metal and/or metalloid-containing sulfide in the present embodiment.

The amorphous metal and/or metalloid-containing sulfide can be obtained, for example, by cooling the heated material at a temperature lowering rate of 100°C/min or more. This does not indicate that cooling at a temperature lowering rate of 100°C/min or more is essential to obtain an amorphous metal and/or metalloid-containing sulfide in the present embodiment. The amorphous metal and/or metalloid-containing sulfide can also be produced by using a crucible formed of an oxide as a crucible. Examples of the crucible formed of an oxide include a $SiO_2$-$Al_2O_3$ crucible and an $Al_2O_3$ crucible.

The metal and/or metalloid-containing sulfide produced by the flux method may be subjected to a step of further washing it with an organic solvent, as necessary. As the organic solvent, either a hydrophilic organic solvent or a hydrophobic organic solvent may be used. Examples of the hydrophilic organic solvent include methanol, ethanol, 1-propanol, 2-propanol, n-butyl alcohol, sec-butyl alcohol, isobutanol, tert-butyl alcohol, acetonitrile, acetone, and dimethylformamide. Examples of the hydrophobic organic solvent include aromatic hydrocarbons such as benzene, toluene, and xylene, aliphatic hydrocarbons such as hexane, heptane, and isooctane, halogenated hydrocarbons such as dichloromethane, 1,2-dichloroethane, chloroform, 1-chlorobutane, and chlorobenzene, ethers such as diethyl ether and t-butyl methyl ether, and ketones such as methyl ethyl ketone and methyl isobutyl ketone.

The metal and/or metalloid-containing sulfide produced is added to the above-described organic solvent, mixed, and then filtered, and thus the metal and/or metalloid-containing sulfide is recovered. The filtration method is not particularly limited. The washing may be performed either once or a plurality of times. Such a method as centrifugation may be used.

After the washing, the metal and/or metalloid-containing sulfide may be subjected to a step of drying it. The drying method is not particularly limited, and for example, the solvent can be removed using a reduced pressure drying method.

The material of the reaction vessel to be used in the heating step may be appropriately selected. Examples of the material of the reaction vessel include carbon, alumina, platinum, gold, zirconia, magnesia, quartz, mullite, silica, and iridium. The reaction vessel may be a crucible.

The reaction vessel may be a reaction vessel made of a single material, or may be a reaction vessel whose surface is coated. Examples of the reaction vessel whose surface is coated include an alumina crucible with a surface coated with carbon and a crucible with a surface coated with an oxide. The crucible may have no hole or a hole on the surface. The crucible may be a porous crucible.

Among these crucibles, a crucible made of carbon and/or oxide or a crucible having a surface formed of carbon and/or oxide is preferable. The form and size of the crucible may be appropriately chosen.

In the metal and/or metalloid-containing sulfide produced by the present production method, an element derived from the component of the crucible, for example, oxygen, can be contained depending on the material of the crucible to be used (for example, a crucible formed of an oxide is used). The amount of the element contained in the metal and/or metalloid-containing sulfide may be in a range represented by a combination of any upper limit value and lower limit value selected from among 50% by mass, 45% by mass, 40% by mass, 35% by mass, 34% by mass, 33% by mass, 32% by mass, 31% by mass, 30% by mass, 25% by mass, 20% by mass, 15% by mass, 10% by mass, 9% by mass, 8% by mass, 7% by mass, 6% by mass, 5% by mass, 4% by mass, 3% by mass, 2% by mass, 1% by mass, 0.7% by mass, 0.5% by mass, 0.3% by mass, 0.2% by mass, 0.1% by mass, 0.05% by mass, and 0.01% by mass of the metal and/or metalloid-containing sulfide produced.

The metal and/or metalloid-containing sulfide with less oxygen can be obtained, for example, by using a carbon crucible or a carbon-coated crucible as a reaction vessel.

A step of further pulverizing or molding the metal and/or metalloid-containing sulfide produced by the production method described above may be included. For example, by compression-molding the metal and/or metalloid-containing sulfide produced by the above-described production method with a press or the like, a pellet of the metal and/or metalloid-containing sulfide can be obtained.

A step of further heating the amorphous metal and/or metalloid-containing sulfide produced by the above-described production method may be included. By heating the amorphous metal and/or metalloid-containing sulfide to a temperature equal to or higher than the glass transition point of the amorphous metal and/or metalloid-containing sulfide, a metal and/or metalloid-containing sulfide that is a glass-ceramic can be obtained.

The metal and/or metalloid-containing sulfide produced by the above-described production method can be used as a material of various products such as a battery, a semiconductor, a ceramic, an integrated circuit, a substrate, an optical glass, a paint, and a detector. A material of the battery may be contained in a positive electrode, a positive electrode active material, a negative electrode, a negative electrode active material, an electrolyte, a solid electrolyte, or the like.

The present invention also provides a sodium-containing sulfide represented by the following formula (I):

$$Na_{3-\delta}\alpha_{1-\delta}\beta_{\delta}S_4 \qquad (I)$$

wherein $\delta$ is $0 < \delta < 1$, $\alpha$ is one or more elements selected from among Sb, P, As, and Bi, and $\beta$ is one or more elements selected from among W, Mo, and Cr.

It is preferable that $\delta$ in the formula (I) satisfy $0 < \delta \le 0.2$. Examples of such a sodium-containing sulfide include $Na_{2.88}Sb_{0.88}W_{0.12}S_4$, $Na_{2.85}Sb_{0.85}W_{0.15}S_4$, $Na_{2.82}Sb_{0.82}W_{0.18}S_4$, $Na_{2.80}Sb_{0.80}W_{0.20}S_4$, $Na_{2.88}Sb_{0.88}Mo_{0.12}S_4$, and $Na_{2.9375}P_{0.9375}W_{0.0675}S_4$.

The sodium-containing sulfide represented by the formula (I) has high ion conductivity of $1.0 \times 10^{-3}$ S cm$^{-1}$ or more at 25°C, and is suitable as a material of a battery.

The sodium-containing sulfide represented by the formula (I) may have been formed into a sintered body via heat treatment. By forming the sintered body, a sodium-containing sulfide having higher ion conductivity than that before firing can be formed. Examples of the heat treatment temperature include heating at a temperature in the range of 200°C to 1000°C.

(Electrode composite)

One embodiment of the present invention provides an electrode composite comprising a sodium-containing sulfide.

The electrode composite may be either a positive electrode composite or a negative electrode composite.

The amount of the sodium-containing sulfide represented by the formula (I) contained in the electrode composite is not particularly limited, and may be, for example, in a range represented by a combination of any upper limit value and lower limit value selected from among 80% by mass, 75% by mass, 70% by mass, 65% by mass, 60% by mass, 55% by mass, 50% by mass, 45% by mass, 40% by mass, 35% by mass, 30% by mass, 25% by mass, 20% by mass, 15% by mass, 10% by mass, 8% by mass, 6% by mass, 5% by mass, 4% by mass, 3% by mass, 2.5% by mass, 2% by mass, 1.5% by mass, 1% by mass, 0.75% by mass, and 0.5% by mass of the electrode composite.

In addition to the sodium-containing sulfide represented by the formula (I), the electrode composite may contain a positive electrode active material (when the electrode composite is a positive electrode composite), a negative electrode active material (when the electrode composite is a negative electrode composite), a binder, a conductive material, a solid electrolyte, or the like. The sodium-containing sulfide represented by the formula (I) has ion conductivity and functions as a solid electrolyte. The positive electrode active material, the negative electrode active material, the binder, the conductive material, and the solid electrolyte are not particularly limited as long as they are commonly used in the art.

The amounts of the positive electrode active material and the negative electrode active material in the electrode composite are not particularly limited, but each may be, for example, in a range represented by a combination of any upper limit value and lower limit value selected from among 95% by mass, 90% by mass, 85% by mass, 80% by mass, 75% by mass, 70% by mass, 65% by mass, 60% by mass, 55% by mass, 50% by mass, 45% by mass, 40% by mass, 35% by mass, 30% by mass, 25% by mass, and 20% by mass of the electrode composite.

The amounts of the binder, the conductive material, and the solid electrolyte in the electrode composite are not particularly limited, and each may be, for example, in a range represented by a combination of any upper limit value and lower limit value selected from among 80% by mass, 70% by mass, 60% by mass, 50% by mass, 40% by mass, 30% by mass, 25% by mass, 20% by mass, 15% by mass, 10% by mass, 7% by mass, 5% by mass, 4% by mass, 3% by mass, 2.5% by mass, 2% by mass, 1.5% by mass, 1% by mass, 0.75% by mass, 0.5% by mass, 0.4% by mass, 0.3% by mass, 0.2% by mass, 0.1% by mass, and 0.01% by mass of the entire mass of the electrode composite.

The electrode composite can be obtained in the form of a pellet by, for example, mixing an electrode active material, and optionally a binder, a conductive material, an electrolyte, or the like, and pressing the resulting mixture.

The pressure of the press may be selected from pressures in the range of, for example, 50 to 2000 MPa.

(Electrode)

The present invention also provides an electrode in which an electrode and a current collector are combined. The electrode composite to be combined with the current collector is the electrode composite of the present invention.
The material, form, and so on of the current collector are not particularly limited as long as the current collector can be combined with the electrode composite of the present invention and can function as a current collector. The form of the current collector may be a form like a uniform alloy plate or a form having a hole. Further, the current collector may be in the form of a foil, a sheet, or a film.
The electrode of the present invention may be produced by combining members formed as an electrode composite and a current collector, respectively, or may be produced by directly forming an electrode composite on a current collector.

(Solid electrolyte)

The present invention provides a solid electrolyte comprising a sodium-containing sulfide represented by the formula (I).
The solid electrolyte may be composed of only the sodium-containing sulfide represented by the above formula (I), or may contain a binder, a conductive material, or a solid electrolyte other than the sodium-containing sulfide represented by the above formula (I), which are commonly used in the art.
The amount of the sodium-containing sulfide represented by the formula (I) contained in the solid electrolyte is not particularly limited, and may be, for example, in a range represented by a combination of any upper limit value and lower limit value selected among from 100% by mass, 99% by mass, 98% by mass, 97% by mass, 95% by mass, 90% by mass, 80% by mass, 70% by mass, 60% by mass, 50% by mass, 40% by mass, 30% by mass, 25% by mass, 20% by mass, 15% by mass, 10% by mass, 8% by mass, 6% by mass, 5% by mass, 4% by mass, 3% by mass, 2.5% by mass, 2% by mass, 1.5% by mass, and 1% by mass of the entire mass of the solid electrolyte.
The amounts of the binder, the conductive material, and the solid electrolyte other than the sodium-containing sulfide represented by the formula (I) are not particularly limited, and each may be, for example, in a range represented by a combination of any upper limit value and lower limit value selected from among 40% by mass, 30% by mass, 25% by mass, 20% by mass, 15% by mass, 10% by mass, 8% by mass, 6% by mass, 5% by mass, 4% by mass, 3% by mass, 2.5% by mass, 2% by mass, 1.5% by mass, 1% by mass, 0.75% by mass, 0.5% by mass, 0.4% by mass, 0.3% by mass, 0.2% by mass, 0.1% by mass, and 0.01% by mass of the entire mass of the electrode active material.

(Battery)

The present invention provides a battery including the solid electrolyte, the electrode composite, or the electrode of the present invention. The electrode of the battery including the solid electrolyte of the present invention or the electrode to be combined with the electrode of the present invention is not particularly limited as long as Na can be given and taken as a movable ion, and an electrode commonly used in the art can be used.
The metal and/or metalloid-containing sulfide produced by the production method may be used instead of the sodium-containing sulfide represented by the above formula (I) used for the electrode active material, the electrode composite, the electrode, the battery, or the solid electrolyte of the present invention described above, or together with the sodium-containing sulfide represented by the above formula (I). The amount of the metal and/or metalloid-containing sulfide produced by the present production method to be used for the electrode active material, the electrode composite, the electrode, the battery, or the solid electrolyte may be the same as that of the sodium-containing sulfide represented by the formula (I). When both the metal and/or metalloid-containing sulfide produced by the present production method and the sodium-containing sulfide represented by the formula (I) are used, the content is calculated using the sum of the respective amounts used.

(Method for producing all-solid-state battery)

The present invention provides a method for producing an all-solid-state sodium battery, the method comprising forming an electrode layer and/or a solid electrolyte layer using the sodium-containing sulfide produced by the present production method.
The formation of the electrode layer and/or the solid electrolyte layer can be attained, for example, by laminating an electrode layer (positive electrode layer), a solid electrolyte layer, and an electrode layer (negative electrode layer), pressing the laminate to obtain a cell, and fixing the cell to a container. The electrode and the solid electrolyte to be used for the electrode layer and the solid electrolyte layer are as described above.

Specific embodiments will be described below.

Item 1

A method for producing a metal and/or metalloid-containing sulfide, wherein the metal and/or metalloid-containing sulfide, provided that the metal is neither an alkali metal nor an alkaline earth metal, is synthesized under normal pressure using a melt obtainable by heating a first sodium polysulfide represented by $Na_2S_x$ ($1 < x \leq 5$) as a reaction medium and a sulfur source.

Item 2

The method according to item 1, wherein the melt is produced by a step of heating a mixture including a second sodium (poly)sulfide represented by $Na_2S_y$ ($0 < y < 5$) and simple substance S.

Item 3

The method according to item 1 or 2, wherein the first or second sodium polysulfide and one or more simple substance elements of the metal and/or the metalloid or one or more compounds containing the metal and/or the metalloid are used in a stoichiometric ratio of the metal and/or metalloid-containing sulfide to be synthesized.

Item 4

The method according to any one of items 1 to 3, wherein the heating step is performed in an open reactor vessel.

Item 5

The method according to any one of items 1 to 4, wherein the heating step is performed in an inert atmosphere.

Item 6

The method according to any one of items 1 to 5, wherein the heating step is performed at a temperature in a range of 400°C to 1000°C.

Item 7

The method according to any one of items 1 to 6, wherein the method is performed in a reaction vessel at least a surface of which to come in contact with the first or second sodium polysulfide is formed of carbon.

Item 8

The method according to any one of items 1 to 6, comprising a step of melting the metal and/or metalloid-containing sulfide by a heating step, and a step of cooling the metal and/or metalloid-containing sulfide at a temperature lowering rate of 100°C/min or more, wherein the metal/metalloid-containing sulfide is amorphous.

Item 9

The method according to any one of items 1 to 6 and 8, wherein the method is performed in a reaction vessel formed of carbon or an oxide.

Item 10

The method according to any one of items 1 to 9, wherein
the first sodium polysulfide is a sodium polysulfide represented by $Na_2S_x$ ($1.5 \leq x \leq 2.5$).

Item 11

The method according to item 3 or any one of items 4 to 10 depending from item 3, wherein the compound is an oxide and/or a nitride.

Item 12

The method of any one of items 1 to 11, wherein the metal and/or metalloid-containing sulfide further contains sodium.

Item 13

The method of item 12, wherein the method is a self-flux method.

Item 14

The method of any one of items 1 to 13, wherein the metal and/or metalloid-containing sulfide is an oxysulfide.

Item 15

The method according to any one of items 1 to 14, wherein the metal and/or the metalloid is one metal or metalloid or two or more metals and/or metalloids selected from among metals and/or metalloids of Group 5 to Group 16 of Period 2 to Period 6.

Item 16

The method according to any one of items 1 to 15, wherein the metal and/or the metalloid is one metal or metalloid or two or more metals and/or metalloids selected from the group consisting of B, Al, Si, P, Zn, Ga, Ge, As, Se, Cd, In, Sn, Sb, Te, Tl, Pb, Bi, V, Cr, Mn, Nb, Mo, Tc, Ta, W, and Re.

Item 17

The method according to any one of items 1 to 16, wherein the metal and/or metalloid-containing sulfide is

a sodium-containing sulfide represented by the following formula (I):

$$Na_{3-\delta}\alpha_{1-\delta}\beta_{\delta}S_4 \qquad (I)$$

wherein $\delta$ is $0 < \delta < 1$, $\alpha$ is one or more elements selected from among Sb, P, As, and Bi, and $\beta$ is one or more elements selected from among W, Mo, and Cr.

Item 18

A sodium-containing sulfide represented by the following formula (I):

$$Na_{3-\delta}\alpha_{1-\delta}\beta_{\delta}S_4 \qquad (I)$$

wherein $\delta$ is $0 < \delta < 1$, $\alpha$ is one or more elements selected from among Sb, P, As, and Bi, and $\beta$ is one or more elements selected from among W, Mo, and Cr.

Item 19

A solid electrolyte or an electrode composite comprising the sodium-containing sulfide according to item 18.

Item 20

A method for producing a sodium ion all-solid-state battery, comprising forming an electrode layer and a solid electrolyte layer by using a sodium-containing sulfide produced by the method according to any one of items 14 to 17 directly or indirectly depending from item 12 or 13.

EXAMPLES

Hereinafter, the present invention is described more specifically by way of examples and comparative examples, but the present invention is not limited at all by these.

In the following examples and comparative examples, $Na_2S$ used was manufactured by Nagao & Co., Ltd. (purity: 99.1% or more), B used was manufactured by Kojundo Chemical Lab. Co., Ltd. (purity: 99% or more), S used was manufactured by Kojundo Chemical Lab. Co., Ltd. (purity: 99.99% or more), Al used was manufactured by FUJIFILM Wako Pure Chemical Corporation (purity: 99.5% or more), Si used was manufactured by FUJIFILM Wako Pure Chemical Corporation (purity: 99.9% or more), P used was manufactured by Kojundo Chemical Lab. Co., Ltd. (purity: 99.9999%), Ga used was manufactured by The Nilaco Corporation (purity: 99.9999% or more), Ge used was manufactured by The Nilaco Corporation (purity: 99.999%), Sn used was manufactured by Sigma-Aldrich Corporation (purity: 99% or more), Sb used was manufactured by FUJIFILM Wako Pure Chemical Corporation (purity: 99.99% or more), Mo used was manufactured by The Nilaco Corporation (purity: 99.9%), W used was manufactured by The Nilaco Corporation (purity: 99.95%), $Sb_2S_3$ used was manufactured by Nihon Seiko Co,. Ltd. (purity: 98% or more), $WS_2$ manufactured by Aldrich (purity: 99%), $MoS_2$ used was manufactured by Aldrich, $SnS_2$ used was manufactured by Mitsuwa Chemical Co., Ltd. (purity: 99.5%), $SiS_2$ used was manufactured by Furuuchi Chemical Corporation (purity: 99.9%), and $Li_2S$ used was manufactured by FUJIFILM Wako Pure Chemical Corporation (purity: 99.99%).

In the following examples and comparative examples, Pulverisette P-7 manufactured by Fritsch GmbH was used as a planetary ball mill. For the constant current cycle test, a charge-discharge measuring device (BTS-2004) manufactured by Nagano Co Ltd. was used. As an X-ray diffractometer, an automated multipurpose X-ray diffractometer SmartLab manufactured by Rigaku Corporation was used. For the measurement of the ionic conductivity and the electronic conductivity, an impedance analyzer (SI-1260) manufactured by Solartron Group Ltd. was used. As a muffle furnace, one manufactured by Denken Co., Ltd. was used.

In a conventional method for synthesizing an alkali metal-containing sulfide, an alkali metal-containing sulfide is synthesized by sealing starting materials in a quartz ampoule or the like and performing heat treatment or by performing heat treatment under a gas flow using lithium polysulfide and a metal sulfide. The present invention provides a method for synthesizing a novel alkali metal-containing sulfide different from conventional methods.

Example 1: Production 1 of metal and/or metalloid-containing sulfide using sodium polysulfide as flux

$Na_2S$, S, and B were weighed to have a molar ratio of $Na_2S : B : S = 3 : 2 : 3$. The weighed sample was mixed with a mortar and a pestle, which had been dried at 50°C for half a day or longer, for about 5 to 10 minutes while being crushed. The mixed sample was placed in a carbon crucible (outer diameter: 7.0 mm, inner diameter: 5.0 mm). This was heat-treated under the following conditions. The treatment was performed in an argon-filled glove box, and the operation was performed in an environment under normal pressure with a moisture value of -70°C or more and an oxygen concentration of 10 ppm or less (hereinafter, all the operations performed in the glove box are performed under these conditions). $Na_3BS_3$ was thereby obtained.

[Heating condition]

(1) The mixture was heated from room temperature to 700°C at a temperature raising rate of 100°C/hour.
(2) The state of 700°C was maintained for 12 hours.
(3) The mixture was cooled to 500°C at a temperature lowering rate of 50°C/hour.
(4) The mixture was cooled from 500°C to room temperature over 10 hours.

Comparative Example 1: $Na_3BS_3$ prepared by conventional method

As a comparison, $Na_3BS_3$ was obtained by a conventional method.

$Na_2S$, S, and B were weighed to have a molar ratio of $Na_2S : B : S = 3 : 2 : 3$. The weighed sample was mixed and the weighed sample was mixed with a mortar and a pestle, which had been dried at 50°C for half a day or longer, for about 5 to 10 minutes while being crushed. The mixed sample was placed in a carbon crucible (outer diameter: 7.0 mm, inner diameter: 5.0 mm), vacuum-sealed in a quartz ampule (outer diameter: 10.0 mm, inner diameter: 7.9 mm), and the ampule was heat-treated in a muffle furnace manufactured by Denken Co., Ltd. The heat treatment conditions are the same as those in Example 1. $Na_3BS_3$ was thereby obtained.

Example 2: Production 2 of metal and/or metalloid-containing sulfide using sodium polysulfide as flux

$SiO_2$-$Al_2O_3$-added $Na_3BS_3$ was obtained in the same manner as in Example 1 except that the crucible was changed from the carbon crucible to a $SiO_2$-$Al_2O_3$ crucible (outer diameter: 7.0 mm, inner diameter: 5.0 mm).

Example 3: Production 3 of metal and/or metalloid-containing sulfide using sodium polysulfide as flux

$Na_3BS_3$ was obtained in the same manner as in Example 1 except that the crucible was changed from the carbon crucible to an $Al_2O_3$ crucible (outer diameter: 7.0 mm, inner diameter: 5.0 mm).

(X-ray diffraction (XRD) measurement)

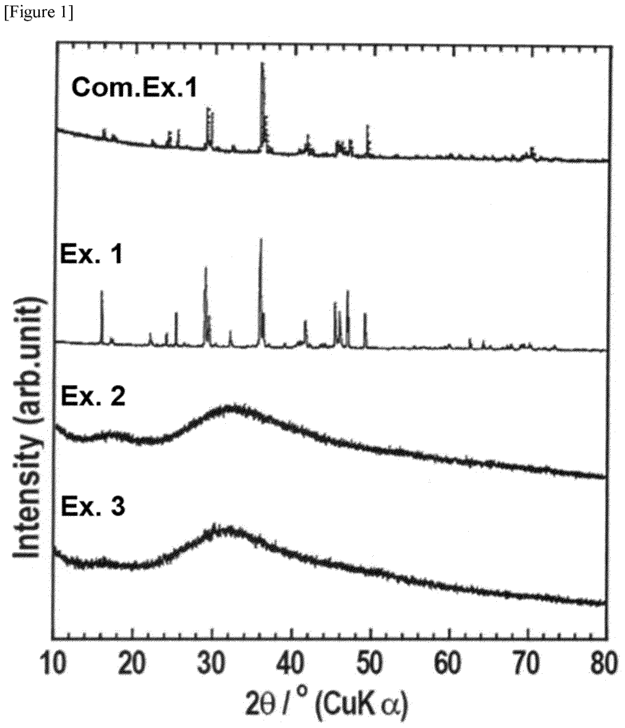

X-ray diffraction (XRD) measurement was performed using each produced $Na_3BS_3$. Structural analysis was carried out using SmartLab as an X-ray diffractometer with CuKα rays (= $1.54056 \times 10^{-10}$ m) at a tube voltage of 45 kV, a tube current of 200 mA, a scanning angle $2\theta = 10°$ to $80°$, a sampling interval of $0.02°$, and a scanning speed of $10°min^{-1}$ (hereinafter, all XRD measurements were performed under these conditions).
The measurement results are shown in Fig. 1. From Fig. 1, it is found that $Na_3BS_3$ has been formed successfully by the method of Example 1 as in the conventional method of Comparative Example 1. From Examples 2 and 3, it is found that $SiO_2$-$Al_2O_3$ added $Na_3BS_3$ in a glass state has been formed successfully by using a crucible made of an oxide. These results demonstrate that an alkali metal (sodium)-containing sulfide can be obtained even without vacuum-sealing in a quartz ampule. The doping of Si, Al, and O to the sample of Example 2 was confirmed by X-ray photoelectron spectroscopy (XPS) and scanning electron microscope (SEM-EDX) observation having an energy dispersive X-ray spectrometer.

(Study of composition ratio)

The composition ratio of each $Na_3BS_3$ prepared was measured using an element analyzer. The element analyzer used was a CHNS elemental analysis VarioEL cube.
The measurement results are shown in Table 1 below. The measurement was performed at n = 2. The results obtained through the experiment are shown in Meas., and the mass ratio of [Na + B + O] to [S] estimated from the obtained calculation is shown in Cal. (Approx.).

[Table 1]

|  | Meas. | | | | Cal. (Approx.) | |
|---|---|---|---|---|---|---|
|  | N (%) | C (%) | H (%) | S (%) | Na, B, O (%) | S (%) |
| $Na_3BS_3$ (ideal composition) |  |  |  |  | 46.3 | 54.6 |
| Example 1 | 0 | 0.17 | 0.19 | 53.68 | 46.13 | 58.87 |
| Example 1 | 0 | 0.26 | 0.47 | 55.63 | 43.96 | 56.04 |
| Example 2 | 0 | 0.17 | 0.18 | 38.68 | 61.18 | 38.81 |
| Example 2 | 0 | 0.18 | 0.3 | 38.38 | 61.43 | 38.56 |
| Comparative Example 1 | 0.82 | 0.84 | 0.29 | 54.95 | 44.96 | 56.04 |
| Comparative Example 1 | 0.04 | 0.35 | 0.57 | 56.73 | 43.73 | 57.27 |

From Table 1, the fact that there is no significant difference in comparison of the resulting elemental composition of Example 1 with the theoretical composition has also shown that the method of the present invention can afford an alkali metal (sodium)-containing sulfide. The composition of S decreased in Example 2. This is because an oxysulfide was formed with inclusion of oxygen derived from the crucible made of the oxide.

Example 4: Production 4 of metal and/or metalloid-containing sulfide using sodium polysulfide as flux

$Na_4SiS_4$ was obtained in the same manner as in Example 1 except that $Na_2S$, S, and Si were weighed to have a molar ratio of $Na_2S : Si : S = 2 : 1 : 2$.

Example 5: Production 5 of metal and/or metalloid-containing sulfide using sodium polysulfide as flux

$Na_5AlS_4$ was obtained in the same manner as in Example 1 except that $Na_2S$, S, and Al were weighed to have a molar ratio of $Na_2S : Al : S = 5 : 2 : 3$.

Example 6: Production 6 of metal and/or metalloid-containing sulfide using sodium polysulfide as flux

$75Na_4SiS_4 \cdot 25Na_5AlS_4$ ($Na_{4.25}Si_{0.75}Al_{0.25}S_4$) was obtained in the same manner as in Example 1 except that the starting materials $Na_2S$, S, Si, and Al were weighed to achieve a molar ratio of $Na_4SiS_4 : Na_5AlS_4 = 75 : 25$.

Example 7: Production 7 of metal and/or metalloid-containing sulfide using sodium polysulfide as flux

$Na_5GaS_4$ was obtained in the same manner as in Example 1 except that $Na_2S$, S, and Ga were weighed to have a molar ratio of $Na_2S : Ga : S = 5 : 2 : 3$.

Example 8: Production 8 of metal and/or metalloid-containing sulfide using sodium polysulfide as flux

$Na_4GeS_4$ was obtained in the same manner as in Example 1 except that $Na_2S$, S, and Ge were weighed to have a molar ratio of $Na_2S : Ge : S = 2 : 1 : 2$.

Example 9: Production 9 of metal and/or metalloid-containing sulfide using sodium polysulfide as flux

$Na_4SnS_4$ was obtained in the same manner as in Example 1 except that $Na_2S$, S, and Sn were weighed to have a molar ratio of $Na_2S : Sn : S = 2 : 1 : 2$.

Example 10: Production 10 of metal and/or metalloid-containing sulfide using sodium polysulfide as flux

$75Na_3BS_3 \cdot 25Na_4SiS_4$ was obtained in the same manner as in Example 1 except that starting materials $Na_2S$, S, Si, and B were weighed to achieve a molar ratio of $Na_3BS_3 : Na_4SiS_4 = 75 : 25$.

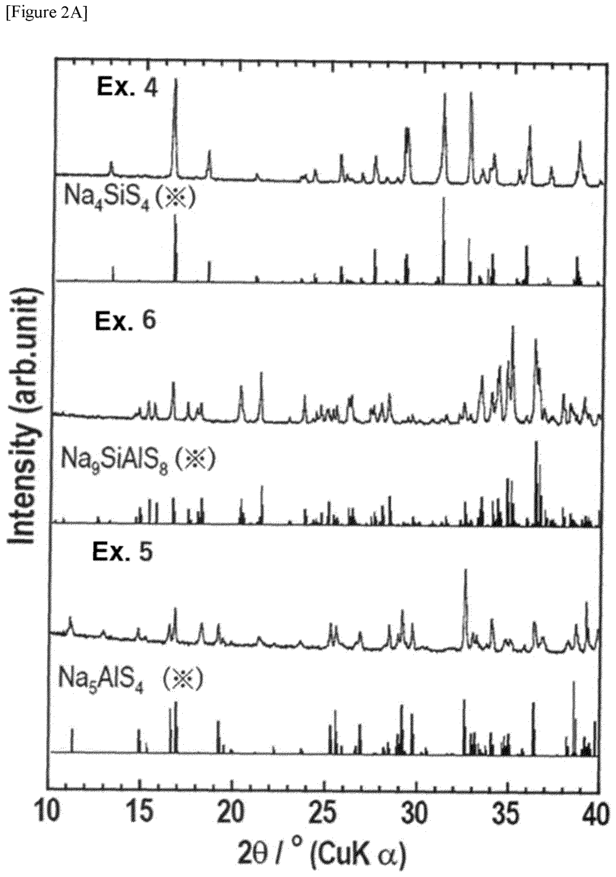

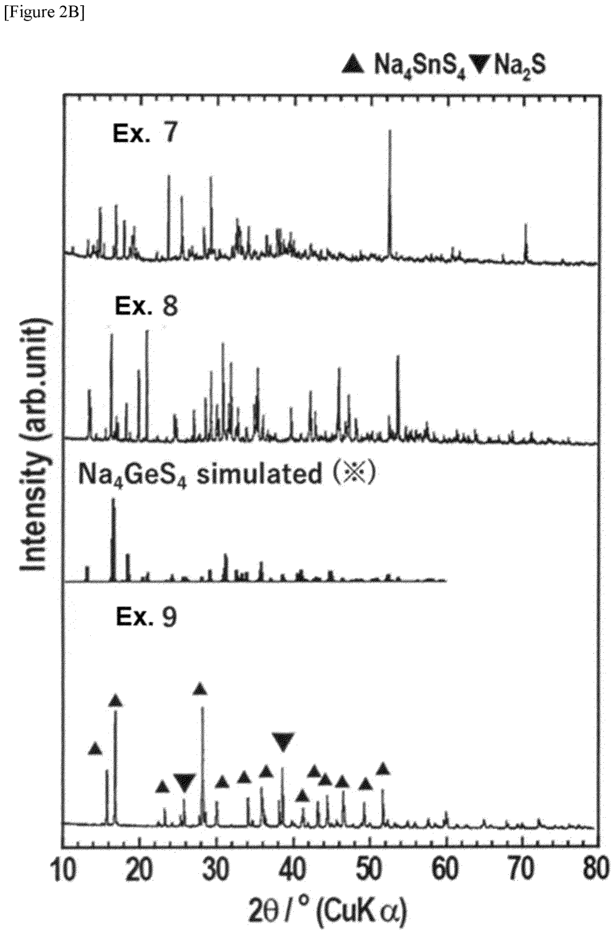

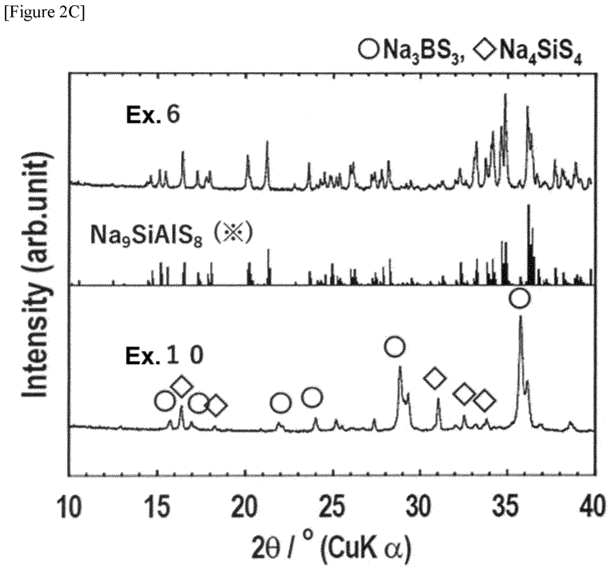

The results of performing XRD measurement on the sodium-containing sulfides of Examples 4 to 10 produced are shown in Figs. 2A to 2C. The measurement results of Examples 4 to 6 are shown in Fig. 2A, the measurement results of Examples 7 to 9 are shown in Fig. 2B, and the measurement results of Examples 6 and 10 are shown in Fig. 2C. (※) in Figs. 2A to 2C is a theoretical value or a crystal structure of a sodium-containing sulfide described in a previous report [Harm S. and Bettina V. Lotsch et al., Frontiers in Chemistry, 8: 90 (2020).].

Figs. 2A to 2C demonstrate that a sodium-containing sulfide can be obtained even when various elements such as Si, Al, Ga, and Ge are used.

(Measurement of ionic conductivity and activation energy)

The ionic conductivity ($\sigma$) and the activation energy ($E_a$) were measured using the sodium-containing sulfides of Examples 2, 4, and 6.

The AC impedance was measured using an impedance analyzer (SI-1260) by preparing a polycarbonate cell as follows.

SKD was used as a current collector, and polycarbonate having an inner diameter of 10 mm was used as an insulating material. 150 mg of each powder sample was weighed out and added into a rod, and molding was performed with a hydraulic press at 360 MPa for 5 minutes using a uniaxial press to prepare a pellet. The pellet was fixed by swaging it with a screw together with a shaft and the rod, placed in a glass container, and sealed with a rubber stopper. The measurement frequency was set to 0.1 Hz to $1 \times 10^6$ Hz, the AC amplitude was set to 10 mV, the intersection of the semicircle of the impedance plot obtained and the real axis was defined as the resistance R ($\Omega$) of the sample, and the ionic conductivity $\sigma$ (S cm$^{-1}$) was determined from the following equation.

$$\sigma = (1/R) \cdot (L/S) \quad (1)$$

L: Thickness of pellet (cm) S: Electrode surface area (0.785 cm$^2$)

The activation energy was calculated from the following equation on the assumption that the activation energy follows the Arrhenius rule from the slope of the graph of the temperature dependence of the ionic conductivity produced by plotting the ionic conductivity measured at each temperature and the reciprocal of the absolute temperature.

$$\sigma = A \exp(-E_a/RT) \quad (2)$$

[$\sigma$ = ionic conductivity (S cm$^{-1}$), A: pre-exponential factor, T: measurement temperature (K), $E_a$: activation energy (kJ mol$^{-1}$), R: gas constant (kJ mol$^{-1}$K$^{-1}$)]

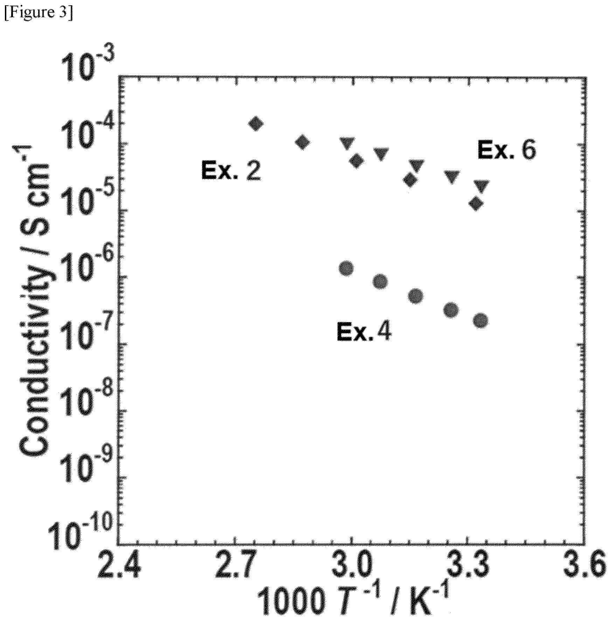

Fig. 3 shows an Arrhenius plot based on the measured ionic conductivities. The ionic conductivity and the activation energy at room temperature are shown in Table 2 below. The previously reported values in Table 2 are the measured values disclosed in [Harm S. and Bettina V. Lotsch et al., Frontiers in Chemistry, 8: 90 (2020).].

[Table 2]

|  | $\sigma_{25}$ (S cm$^{-1}$) | $E_a$ (kJ mol$^{-1}$) |
|---|---|---|
| Example 4 | $2.00 \times 10^{-7}$ | 42.7 |
| Previously-reported measured value of Na$_4$SiS$_4$ | $1.64 \times 10^{-7}$ | - |
| Example 6 | $2.11 \times 10^{-5}$ | 35.1 |
| Previously-reported measured value of 75Na$_4$SiS$_4$ · 25Na$_5$AlS$_4$ | $2.04 \times 10^{-5}$ | - |

From Table 2, it is found that the sodium-containing sulfides of Examples 4 and 6 produced by the method of the present invention have ionic conductivities equivalent to those previously reported.

Example 11: Production 11 of metal and/or metalloid-containing sulfide using sodium polysulfide as flux

Na$_3$BS$_3$-SiO$_2$ was obtained in the same manner as in Example 1 except that Na$_2$S, S, B, and SiO$_2$ were weighed and mixed to have a molar ratio of Na$_2$S : B : S : SiO$_2$ = 3 : 2 : 3 : 2.

Example 12: Production 12 of metal and/or metalloid-containing sulfide using sodium polysulfide as flux

Na$_3$BS$_3$-Al$_2$O$_3$ was obtained in the same manner as in Example 1 except that Na$_2$S, S, B, and Al$_2$O$_3$ were weighed and mixed to have a molar ratio of Na$_2$S : B : S : Al$_2$O$_3$ = 3 : 2 : 3 : 2.

Example 13: Production 13 of metal and/or metalloid-containing sulfide using sodium polysulfide as flux

75Na$_4$SiS$_4$·25Na$_4$SiO$_4$ was obtained in the same manner as in Example 1 except that starting materials Na$_2$S, S, Si and SiO$_2$ were weighed to achieve a molar ratio of Na$_4$SiS$_4$ : Na$_4$SiO$_4$ = 75 : 25.

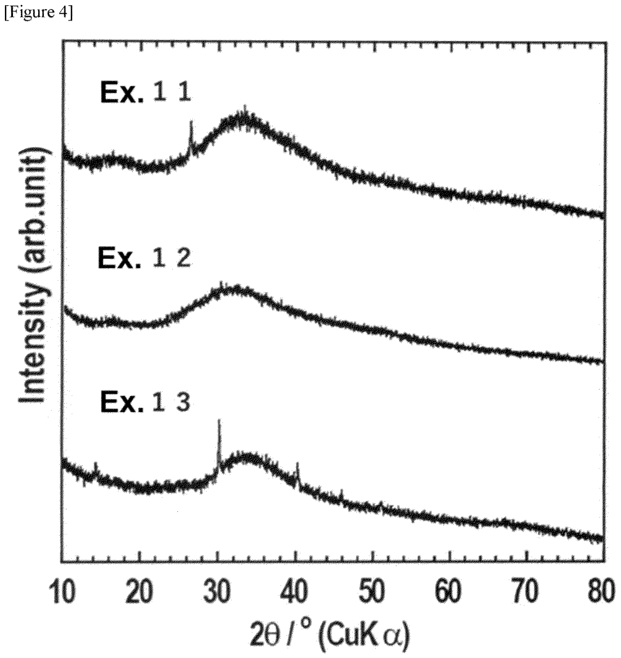

The results of performing XRD measurement on the sodium-containing sulfide samples of Examples 11 to 13 are shown in Fig. 4.

Fig. 4 demonstrates that a sodium-containing sulfide (oxysulfide) can be produced by the method of the present invention even when an oxide is added. The oxysulfides obtained were amorphous.

Example 14: Production 14 of metal and/or metalloid-containing sulfide using sodium polysulfide as flux

Na$_2$S, S, and B were weighed to have a molar ratio of Na$_2$S : B : S = 3 : 2 : 3. The weighed sample was mixed with a mortar and a pestle, which had been dried at 50°C for half a day or longer, for about 5 to 10 minutes while being crushed. The mixed sample was placed in a carbon crucible. This was heat-treated under the same conditions as in Example 1.

The sample immediately after the heating was rapidly cooled using an iron press. Na$_3$BS$_3$ (quenched product) was thereby obtained. The authors believe the cooling rate was 300°C/s or higher.

Example 15: Production 15 of metal and/or metalloid-containing sulfide using sodium polysulfide as flux

Na$_4$SiS$_4$ (quenched product) was obtained in the same manner as in Example 14 except that Na$_2$S, S, and Si were weighed to have a molar ratio of Na$_2$S : Si: S = 2 : 1 : 2.

Example 16: Production 16 of metal and/or metalloid-containing sulfide using sodium polysulfide as flux

$Na_5AlS_4$ (quenched product) was obtained in the same manner as in Example 14 except that $Na_2S$, S, and Al were weighed to have a molar ratio of $Na_2S : Al : S = 5 : 2 : 3$.

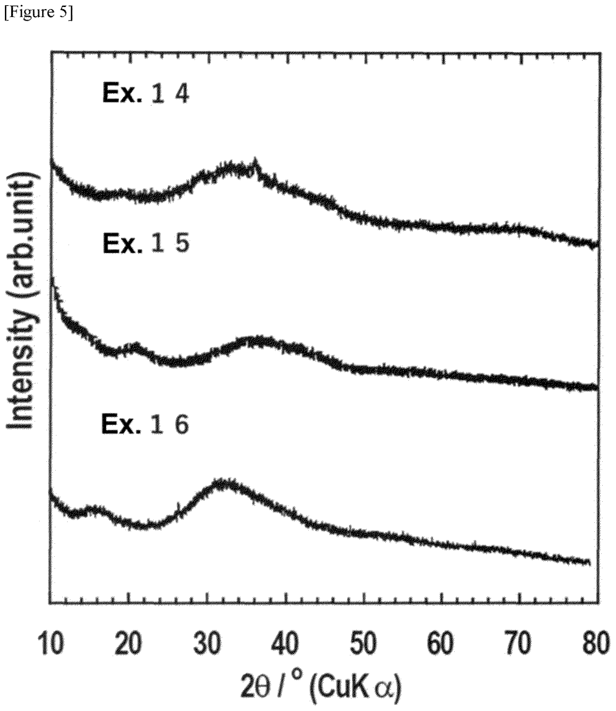

The results of performing XRD measurement on the sodium-containing sulfide samples of Examples 14 to 16 are shown in Fig. 5.

From Fig. 5, it can be understood that all the sodium-containing sulfide samples of Example 14 to 16 are in an amorphous state. This demonstrates that an amorphous sodium-containing sulfide can be produced by performing a rapid cooling operation regardless of the element to be added.

Example 17: Production 17 of metal and/or metalloid-containing sulfide using sodium polysulfide as flux

$Na_2S$, S, Sb, and W were weighed to have a molar ratio of $Na_2S : Sb : W : S = 36 : 22 : 3 : 64$. The weighed sample was mixed with a mortar and a pestle, which had been dried at 50°C for half a day or longer, for about 5 to 10 minutes while being crushed. The mixed sample (0.5 g) was placed in a carbon crucible (outer diameter: 7.0 mm, inner diameter: 5.0 mm). This was heat-treated under the following conditions. $Na_{2.88}Sb_{0.88}W_{0.12}S_4$ was thereby obtained.

[Heating condition]

    (1) The mixture was heated from room temperature to 450°C at a temperature raising rate of 100°C/hour.
    (2) The state of 450°C was maintained for 12 hours.
    (3) The mixture was heated to 500°C at a temperature raising rate of 50°C/hour.
    (4) The mixture was cooled from 500°C to room temperature over 10 hours.

Example 18: Production 18 of metal and/or metalloid-containing sulfide using sodium polysulfide as flux

$Na_{2.88}Sb_{0.88}W_{0.12}S_4$ was obtained in the same manner as in Example 17 except that the amount of the sample to be treated was changed from 0.5 g to 5.0 g.

Example 19: Production 19 of metal and/or metalloid-containing sulfide using sodium polysulfide as flux

$Na_{2.85}Sb_{0.85}W_{0.15}S_4$ was obtained in the same manner as in Example 17 except that $Na_2S$, S, Sb, and W were weighed to have a molar ratio of $Na_2S : Sb : W : S = 57 : 34 : 6 : 103$.

Example 20: Production 20 of metal and/or metalloid-containing sulfide using sodium polysulfide as flux

$Na_{2.82}Sb_{0.82}W_{0.18}S_4$ was obtained in the same manner as in Example 17 except that $Na_2S$, S, Sb, and W were weighed to have a molar ratio of $Na_2S : Sb : W : S = 141 : 82 : 18 : 259$.

Example 21: Production 21 of metal and/or metalloid-containing sulfide using sodium polysulfide as flux

$Na_{2.80}Sb_{0.80}W_{0.20}S_4$ was obtained in the same manner as in Example 17 except that $Na_2S$, S, Sb, and W were weighed to have a molar ratio of $Na_2S : Sb : W : S = 7 : 4 : 1 : 13$.

Example 22: Production of glass-ceramic $Na_{2.88}Sb_{0.88}W_{0.12}S_4$ by conventional method

A glass-ceramic $Na_{2.88}Sb_{0.88}W_{0.12}S_4$ was produced by a conventional method in accordance with the following procedure.

$Na_2S$, $Sb_2S_3$, S (here, S was manufactured by Aldrich (purity: 99.98% or more)), and $WS_2$ were mixed at a composition of $Na_{2.88}Sb_{0.88}W_{0.12}S_4$, and charged into a planetary ball mill. After charging, mechanical milling treatment was performed, affording glassy $Na_{2.88}Sb_{0.88}W_{0.12}S_4$. As the planetary ball mill, Pulverisette P-7 manufactured by Fritsch GmbH was used. A mill was used in which the pot and the balls were made of $ZrO_2$ and the 45-ml pot contained 250 balls each having a diameter of 4 mm. The mechanical milling treatment was carried out for 15 hours in a dry argon-filled glove box at room temperature with a sample loading of 0.5 g and a rotation speed of 510 rpm.

About 150 mg of glassy $Na_{2.88}Sb_{0.88}W_{0.12}S_4$ was pressed (pressure: 360 MPa to 1080 MPa) at room temperature for 5 minutes, affording an $Na_{2.88}Sb_{0.88}W_{0.12}S_4$ pellet having a thickness of about 1 mm. The $Na_{2.88}Sb_{0.88}W_{0.12}S_4$

pellet was heated from 250°C (x = 0) to 275°C for 12 hours, affording a glass-ceramic $Na_{2.88}Sb_{0.88}W_{0.12}S_4$ pellet.

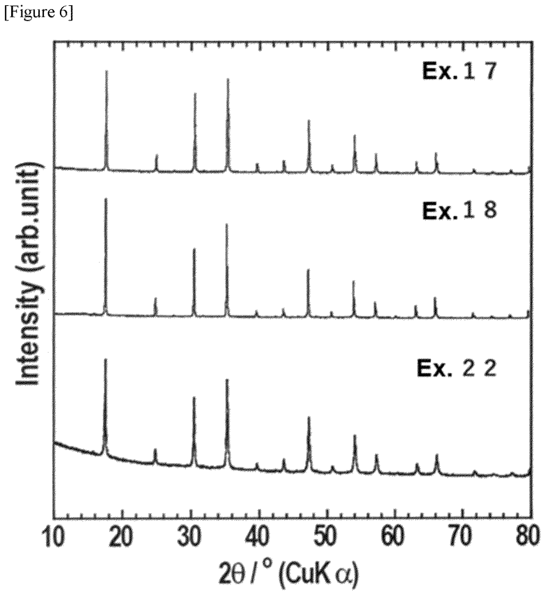

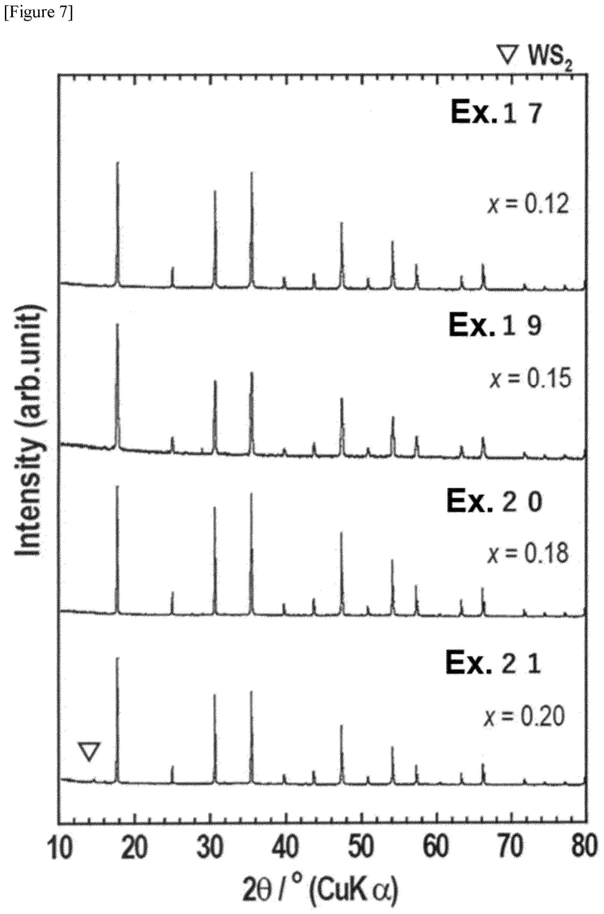

The results of performing XRD measurement on the sodium-containing sulfide samples of Examples 17 to 22 are shown in Figs. 6 and 7. The results of Examples 17, 18, and 22 are shown in Fig. 6, and the results of Examples 17 and 19 to 21 are shown in Fig. 7.

From Figs. 6 and 7, it is found that a pattern attributable to $Na_3SbS_4$ having a cubic crystal structure was observed regardless of the amount of W added.

It is demonstrated that $Na_{3-\delta}\alpha_{1-\delta}\beta_\delta S_4$-based sodium-containing sulfides can be produced with a targeted composition by the method of the present invention regardless of the amount of W added.

The ionic conductivity ($\sigma$) and the activation energy ($E_a$) were measured using the sodium-containing sulfides of Examples 17 to 22. These measurements were performed in the same manner as described above. As to the sample of Example 17, a pellet prepared with an applied pressure of not 360 MPa but 720 MPa was also subjected to measurement.

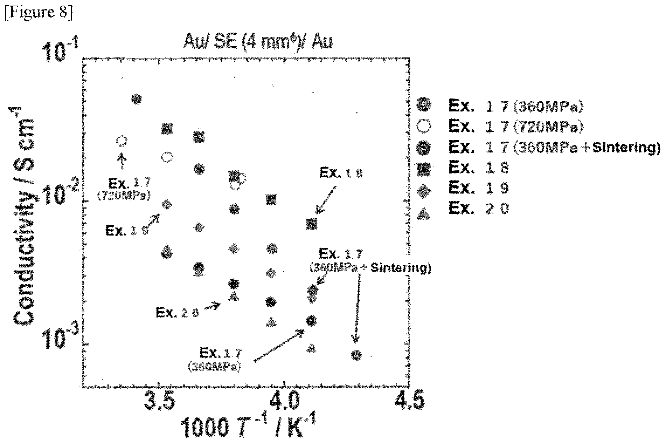

For each of the pellets of the sodium-containing sulfides of Examples 17 to 22, a sintered body was prepared by heating at a temperature of 275°C for 1.5 hours and then used for the measurement. The measurement results are shown in Fig. 8 and Table 3.

[Table 3]

| Sample used | Pelletization pressure (MPa) | Sinterin g (°C) | $\sigma_{25}$ (S cm$^{-1}$) | $E_a$ (kJ mol$^{-1}$) |
|---|---|---|---|---|
| Example 17 | 360 | - | $6.00 \times 10^{-3}$ | 16 |
| Example 17 | 720 | - | $2.60 \times 10^{-2}$ | 11.7 |
| Example 17 | 360 | 275 | $7.03 \times 10^{-2}$ | 38.3 |
| Example 18 | 360 | 275 | $5.60 \times 10^{-2}$ | 23 |
| Example 19 | 360 | 275 | $1.50 \times 10^{-2}$ | 22 |
| Example 20 | 360 | 275 | $7.50 \times 10^{-3}$ | 23 |
| Example 21 | 360 | 275 | N/A | N/A |
| Example 22 | 360 | 275 | $1.20 \times 10^{-2}$ | 15 |

From Fig. 8 and Table 3, it is found that the sodium-containing sulfides produced by the method of the present invention have extremely superior ionic conductivity. In particular, it is found that the pellets prepared at high pressure from the samples of Examples 17 and 18 and the sintered bodies of the samples have high ionic conductivities of $1.0 \times 10^{-2}$ or more. These ionic conductivities are higher than those of conventionally known sodium-containing sulfides. Therefore, $Na_{3-\delta}\alpha_{1-\delta}\beta_\delta S_4$-based sodium-containing sulfides are particularly suitable as a material of a battery.

Example 23: Production 22 of metal and/or metalloid-containing sulfide using sodium polysulfide as flux

$Na_{2.88}Sb_{0.88}W_{0.12}S_4$ of Example 22 was obtained in the same manner as in Example 17 except that the heat treatment temperature was changed from 450°C to 550°C.

Example 24: Production 23 of metal and/or metalloid-containing sulfide using sodium polysulfide as flux

$Na_{2.88}Sb_{0.88}Mo_{0.12}S_4$ was obtained in the same procedure as in Example 17 except that W was changed to Mo.

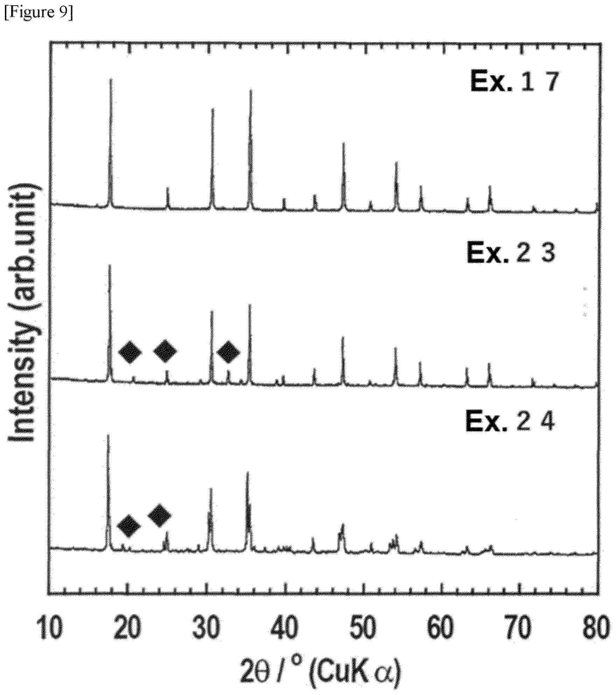

The results of performing XRD measurement on the sodium-containing sulfide samples of Examples 17, 23 and 24 are shown in Fig. 9. Fig. 9 demonstrates that a sodium-containing sulfide can be obtained by the method of the present invention even when Mo is used.

Example 25: Production 24 of metal and/or metalloid-containing sulfide using sodium polysulfide as flux

$Na_{2.9375}P_{0.9375}W_{0.0675}S_4$ was obtained in the same manner as in Example 17 except that P was used instead of Sb, $Na_2S$, S, P, and W were weighed to have a molar ratio of $Na_2S : P : W : S = 1175 : 750 : 54 : 2025$, and the heat treatment temperature was changed from 450°C to 550°C.

Example 26: Production 25 of metal and/or metalloid-containing sulfide using sodium polysulfide as flux

$Na_{2.85}P_{0.85}W_{0.15}S_4$ was obtained in the same manner as in Example 17 except that P was used instead of Sb, $Na_2S$, S, P, and W were weighed to have a molar ratio of $Na_2S : P : W : S = 57 : 34 : 6 : 103$, and the heat treatment temperature was changed from 450°C to 550°C.

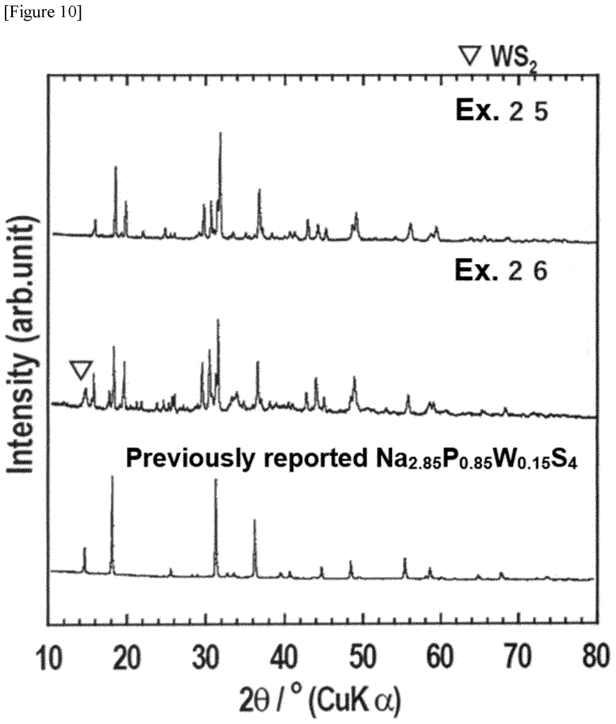

The results of performing XRD measurement on the sodium-containing sulfide samples of Examples 25 and 26 are shown in Fig. 10. The result of measurement for $Na_{2.85}P_{0.85}W_{0.15}S_4$ prepared by a conventional method in the same manner as in Example 22 except that $Na_2S$, $P_2S_5$, S, and $WS_2$ were used as starting materials is also shown in Fig. 10. Fig. 10 demonstrates that a sodium-containing sulfide can be obtained by the method of the present invention even when P is used.

(Comparison of behavior in open reaction vessel between sodium polysulfide flux and lithium polysulfide flux)

A mixture of $Na_2S$ and S and a mixture of $Li_2S$ and S were prepared, heated, and subjected to thermogravimetry-differential thermal analysis (TG-DTA), and the weight change and the DTA curve of the mixtures were compared.

As a measurement sample, a sample obtained by mixing $Na_2S$ and S or $Li_2S$ and S at a molar ratio of 1 : 1 was used. As to the measurement conditions, a sample was placed in a thermogravimetric-differential thermal analyzer under a $N_2$ stream, and measurement was performed at a temperature raising rate of 2°C/min or 10°C/min.

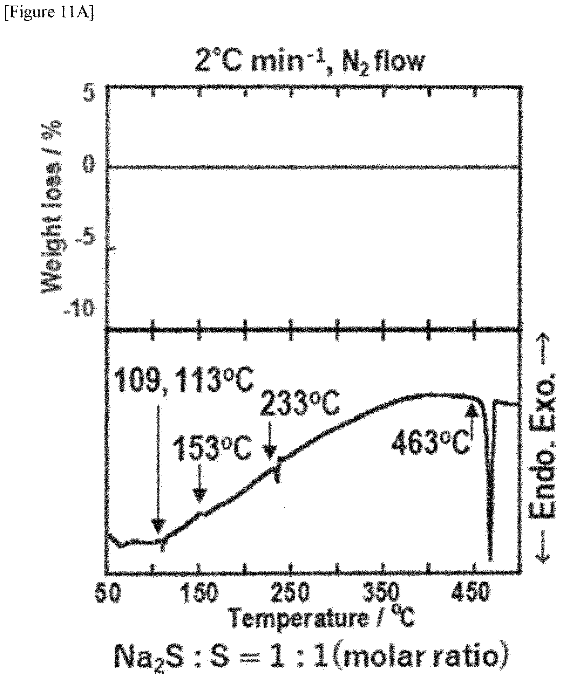

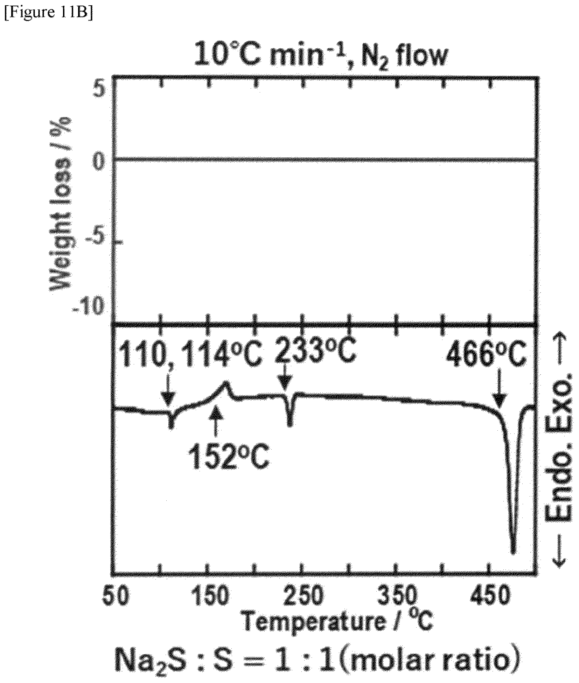

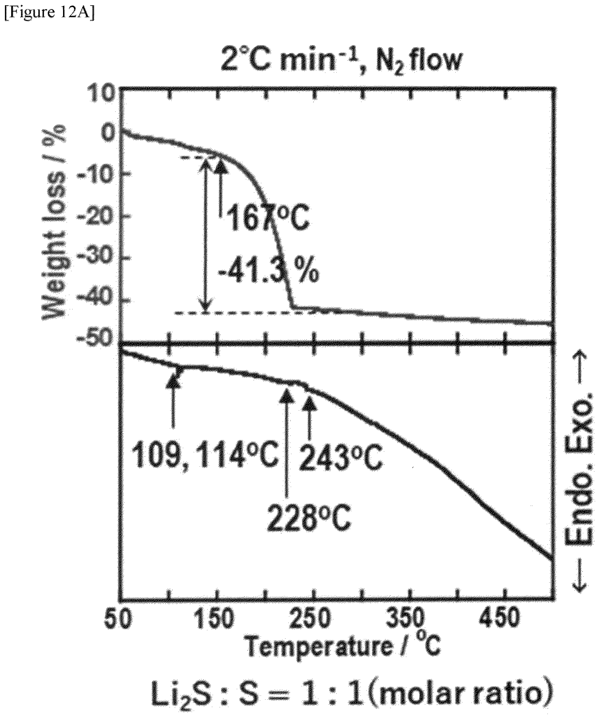

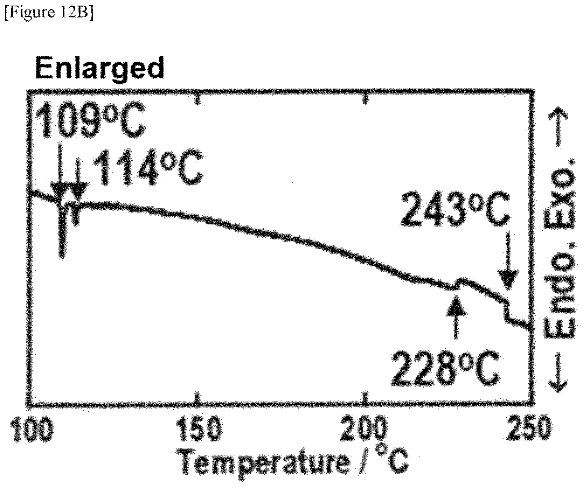

The measurement results are shown in Figs. 11A, 11B, 12A, and 12B. The result of performing TG-DTA measurement on a mixture of $Na_2S$ and S at a temperature raising rate of 2°C is shown in Fig. 11A, the result of performing TG-DTA measurement on a mixture of $Na_2S$ and S at a temperature raising rate of 10°C are shown in Fig. 11B, and the result of performing TG-DTA measurement on a mixture of $Li_2S$ and S at a temperature raising rate of 2°C are shown in Fig. 12A. Fig. 12B is an enlarged view of a part of Fig. 12A. Fig. 11A demonstrates that no change in weight was observed with the mixture of $Na_2S$ and S during heating, and an endothermic peak due to melting of $Na_2S_2$ is observed at 463°C. It is also demonstrated that no significant difference is observed in the results of Figs. 11A and 11B. In contrast, from Figs. 12A and 12B, it is found that with the mixture of $Li_2S$ and S, the weight started to decrease at 167°C, and the weight decreased by 41.3%. This is because volatilization of S occurred in the mixture of $Li_2S$ and S.

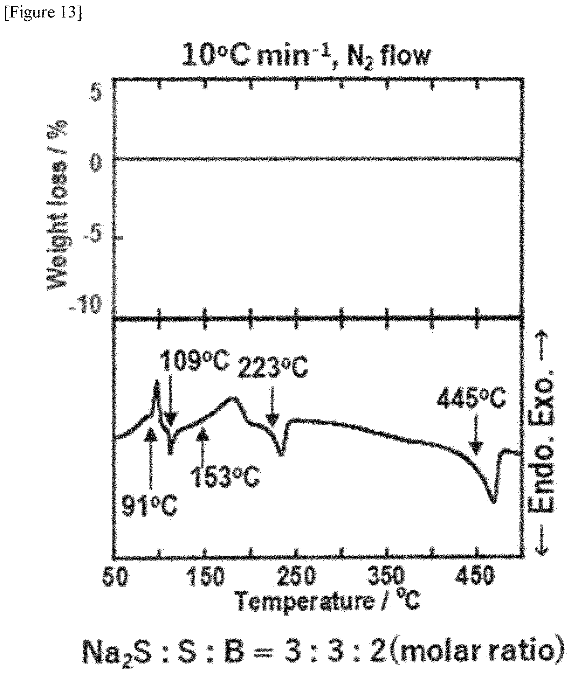

Also for the sample prepared by weighing and mixing $Na_2S$, S, and B to have a molar ratio of $Na_2S : B : S = 3 : 2 : 3$ (the composition of $Na_3BS_3$ of Example 1), TG-DTA measurement was performed at a temperature raising rate of 10°C/min. The results are shown in Fig. 13. From Fig. 13, even with the mixture of $Na_2S$, S, and B, no decrease in weight was confirmed during the measurement as in the result on the mixture of $Na_2S$ and S.

From these facts, it is shown that by the method of the present invention using a flux of sodium polysulfide, a sodium-containing sulfide can be obtained even in an open system without the occurrence of volatilization of S, and it is also shown that this cannot be achieved by a method using a flux of lithium polysulfide.

**Claims**

1. A method for producing a metal and/or metalloid-containing sulfide, wherein the metal and/or metalloid-containing sulfide, provided that the metal is neither an alkali metal nor an alkaline earth metal, is synthesized under normal pressure using a melt obtainable by heating a first sodium polysulfide represented by $Na_2S_x$ ($1 < x \leq 5$) as a reaction medium and a sulfur source.

2. The method according to claim 1, wherein the melt is produced by a step of heating a mixture including a second sodium (poly)sulfide represented by $Na_2S_y$ ($0 < y < 5$) and simple substance S.

3. The method according to claim 1 or 2, wherein the first or second sodium polysulfide and one or more simple substance elements of the metal and/or the metalloid or one or more compounds containing the metal and/or the metalloid are used in a stoichiometric ratio of the metal and/or metalloid-containing sulfide to be synthesized.

4. The method according to any one of claims 1 to 3, wherein the heating step is performed in an open reactor vessel.

5. The method according to any one of claims 1 to 4, wherein the heating step is performed in an inert atmosphere.

6. The method according to any one of claims 1 to 5, wherein the heating step is performed at a temperature in a range of 400°C to 1000°C.

7. The method according to any one of claims 1 to 6, wherein the method is performed in a reaction vessel at least a surface of which to come in contact with the first or second sodium polysulfide is formed of carbon.

8. The method according to any one of claims 1 to 6, comprising a step of melting the metal and/or metalloid-containing sulfide by a heating step, and a step of cooling the metal and/or metalloid-containing sulfide at a temperature lowering rate of 100°C/min or more, wherein the metal/metalloid-containing sulfide is amorphous.

9. The method according to any one of claims 1 to 6 and 8, wherein the method is performed in a reaction vessel formed of carbon or an oxide.

10. The method according to any one of claims 1 to 9, wherein the first sodium polysulfide is a sodium polysulfide represented by $Na_2S_x$ ($1.5 \leq x \leq 2.5$).

11. The method according to claim 3 or any one of claims 4 to 10 depending from claim 3, wherein the compound is an oxide and/or a nitride.

12. The method of any one of claims 1 to 11, wherein the metal and/or metalloid-containing sulfide further contains sodium.

13. The method of claim 12, wherein the method is a self-flux method.

14. The method of any one of claims 1 to 13, wherein the metal and/or metalloid-containing sulfide is an oxysulfide.

15. The method according to any one of claims 1 to 14, wherein the metal and/or the metalloid is one metal or metalloid or two or more metals and/or metalloids selected from among metals and/or metalloids of Group 5 to Group 16 of Period 2 to Period 6.

16. The method according to any one of claims 1 to 15, wherein the metal and/or the metalloid is one metal or metalloid or two or more metals and/or metalloids selected from the group consisting of B, Al, Si, P, Zn, Ga, Ge, As, Se, Cd, In, Sn, Sb, Te, Tl, Pb, Bi, V, Cr, Mn, Nb, Mo, Tc, Ta, W, and Re.

17. The method according to any one of claims 1 to 16, wherein the metal and/or metalloid-containing sulfide is a sodium-containing sulfide represented by the following formula (I):

$$Na_{3-\delta}\alpha_{1-\delta}\beta_{\delta}S_4 \qquad \text{(I)}$$

wherein $\delta$ is $0 < \delta < 1$, $\alpha$ is one or more elements selected from among Sb, P, As, and Bi, and $\beta$ is one or more elements selected from among W, Mo, and Cr.

18. A sodium-containing sulfide represented by the following formula (I):

$$Na_{3-\delta}\alpha_{1-\delta}\beta_{\delta}S_4 \qquad \text{(I)}$$

wherein $\delta$ is $0 < \delta < 1$, $\alpha$ is one or more elements selected from among Sb, P, As, and Bi, and $\beta$ is one or more elements selected from among W, Mo, and Cr.

19. A solid electrolyte or an electrode composite comprising the sodium-containing sulfide according to claim 18.

20. A method for producing a sodium ion all-solid-state battery,
comprising forming an electrode layer and a solid electrolyte layer by using a sodium-containing sulfide produced by the method according to any one of claims 14 to 17 directly or indirectly depending from claim 12 or 13.

[Figure 1]

[Figure 2A]

[Figure 2B]

[Figure 2C]

[Figure 3]

[Figure 4]

[Figure 5]

[Figure 6]

[Figure 7]

[Figure 8]

[Figure 9]

[Figure 10]

[Figure 11A]

[Figure 11B]

[Figure 12A]

[Figure 12B]

[Figure 13]

| INTERNATIONAL SEARCH REPORT | International application No. |
|---|---|
| | **PCT/JP2022/043613** |

**A.    CLASSIFICATION OF SUBJECT MATTER**

*C01B 17/20*(2006.01)i; *C01B 17/34*(2006.01)i; *H01B 1/06*(2006.01)i; *H01B 1/10*(2006.01)i; *H01M 10/0562*(2010.01)i
FI:    C01B17/20; C01B17/34; H01B1/10; H01B1/06 A; H01M10/0562

According to International Patent Classification (IPC) or to both national classification and IPC

**B.    FIELDS SEARCHED**

Minimum documentation searched (classification system followed by classification symbols)

C01B17/20; C01B17/34; H01B1/06; H01B1/10; H01M10/0562

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

JSTPlus/JMEDPlus/JST7580 (JDreamIII); CAplus/REGISTRY (STN)

**C.    DOCUMENTS CONSIDERED TO BE RELEVANT**

| Category* | Citation of document, with indication, where appropriate, of the relevant passages | Relevant to claim No. |
|---|---|---|
| X | WO 2020/022342 A1 (UNIVERSITY PUBLIC CORPORATION OSAKA) 30 January 2020 (2020-01-30) | 18, 19 |
| | examples | |
| A | | 1-17, 20 |
| X | TSUJI, Fumika et al. Mechanochemical synthesis and characterization of Na3-xP1-xWxS4 solid electrolytes. Journal of Power Sources. 2021, vol. 506, https://doi.org/10.1016/j.jpowsour.2021.230100 | 18, 19 |
| | pp. 2-7 | |
| A | | 1-17, 20 |
| X | JALEM, Randy et al. First-Principles Calculation Study of Na+ Superionic Conduction Mechanism in W- and Mo-Doped Na3SbS4 Solid Electrolytes. Chemistry of Materials. 2020, vol. 32, pp. 8373-8381, https://dx.doi.org/10.1021/acs.chemmater.0c02318 | 18, 19 |
| | pp. 8374-8378 | |
| A | | 1-17, 20 |

☑ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **19 January 2023** | **31 January 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT

International application No.

**PCT/JP2022/043613**

| C. | DOCUMENTS CONSIDERED TO BE RELEVANT |
|---|---|

| Category* | Citation of document, with indication, where appropriate, of the relevant passages | Relevant to claim No. |
|---|---|---|
| A | WO 2019/093273 A1 (OSAKA PREFECTURE UNIVERSITY PUBLIC CORPORATION) 16 May 2019 (2019-05-16) <br> entire text | 1-20 |
| A | JP 2018-156938 A (PANASONIC IP MAN CORP) 04 October 2018 (2018-10-04) <br> entire text | 1-20 |
| A | KR 10-2017-0112033 A (ULSAN NATIONAL INSTITUTE OF SCIENCE AND TECHNOLOGY) 12 October 2017 (2017-10-12) <br> entire text | 1-20 |
| A | JP 01-226704 A (DEGUSSA AG) 11 September 1989 (1989-09-11) <br> entire text | 1-20 |

Form PCT/ISA/210 (second sheet) (January 2015)

INTERNATIONAL SEARCH REPORT

Information on patent family members

International application No.

**PCT/JP2022/043613**

| Patent document cited in search report | | | Publication date (day/month/year) | Patent family member(s) | | | Publication date (day/month/year) |
|---|---|---|---|---|---|---|---|
| WO | 2020/022342 | A1 | 30 January 2020 | US examples | 2021/0296707 | A1 | |
| | | | | EP | 3828978 | A1 | |
| | | | | CN | 112470317 | A | |
| WO | 2019/093273 | A1 | 16 May 2019 | US entire text | 2020/0335815 | A1 | |
| JP | 2018-156938 | A | 04 October 2018 | (Family: none) | | | |
| KR | 10-2017-0112033 | A | 12 October 2017 | (Family: none) | | | |
| JP | 01-226704 | A | 11 September 1989 | EP entire text | 326914 | A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021157884 A

**Non-patent literature cited in the description**

- **HARM S ; BETTINA V ; LOTSCH et al.** *Frontiers in Chemistry,* 2020, vol. 8, 90

- **HARM S. ; BETTINA V. LOTSCH et al.** *Frontiers in Chemistry,* 2020, vol. 8, 90